# EUROPEAN PATENT APPLICATION

(11) **EP 4 844 745 A1**
(43) Date of publication of application: **25.11.2026**
(21) Application number: 25762313.2
(22) Date of filing: 05.02.2025
(51) Int. Cl.: G10L 15/00, G10L 15/22

(54) **ELECTRONIC DEVICE, METHOD, AND NON-TRANSITORY COMPUTER-READABLE STORAGE MEDIUM FOR CONVERTING VOICE DATA RELATED TO APPLICATION**

(30) Priority: 26.02.2024 KR 20240027580; 09.04.2024 KR 20240048194
(71) Applicant: Samsung Electronics Co., Ltd., Suwon-si, Gyeonggi-do 16677 (KR)
(72) Inventor: SON, Yongju, Suwon-si Gyeonggi-do 16677 (KR); SEO, Mira, Suwon-si Gyeonggi-do 16677 (KR); KIM, Sangheon, Suwon-si Gyeonggi-do 16677 (KR); PARK, Jinki, Suwon-si Gyeonggi-do 16677 (KR); YOON, Youngjung, Suwon-si Gyeonggi-do 16677 (KR); CHOI, Hyunsik, Suwon-si Gyeonggi-do 16677 (KR); LIM, Yeunwook, Suwon-si Gyeonggi-do 16677 (KR)
(74) Representative: Gulde & Partner
(86) International application number: PCT/KR2025/001722
(87) International publication number: WO 2025/183379

(57) **Abstract**

According to an embodiment, a method performed by an electronic device comprises an operation of identifying that a call connection with an external electronic device is established through an application related to a voice over Internet protocol (VoIP). The method comprises an operation of, while the call connection is established, obtaining first voice data of a first language type, the first voice data being related to the application. The method comprises an operation of obtaining a second text of a second language type distinguished from the first language type on the basis of a first text of the first language type converted from the first voice data of the first language type. The method comprises an operation of displaying, through a display of the electronic device, a visual object including the first text and the second text, in an overlapping manner on a user interface for the application.

## Description

### Technical Field

The following descriptions relate to an electronic device, a method, and a non-transitory computer readable storage medium for converting voice data related to an application.

### Background Art

An electronic device may provide a call service for transmitting and receiving audio and video signals related to an external electronic device located at a different position through an application related to a voice over internet protocol (VoIP). A user of the electronic device may communicate with other users located in different spaces using the service.

The above-described information may be provided as related art for the purpose of helping the understanding of the present disclosure. No assertion or determination is raised as to whether any of the above-described content may be applied as prior art related to the present disclosure.

### Disclosure

### Technical Solution

According to an embodiment, an electronic device may comprise a display, a speaker, a microphone, a communication circuit, at least one processor comprising processing circuitry, and memory comprising one or more storage media storing instructions. The instructions, when executed by the at least one processor individually or collectively, may cause the electronic device to identify that a call connection with an external electronic device is established through an application related to a voice over internet protocol (VoIP). The instructions, when executed by the at least one processor individually or collectively, may cause the electronic device to, while the call connection is established, obtain first voice data of a first language type, related to the application. The instructions, when executed by the at least one processor individually or collectively, may cause the electronic device to obtain, based on first text of the first language type converted from the first voice data of the first language type, second text of a second language type distinct from the first language type. The instructions, when executed by the at least one processor individually or collectively, may cause the electronic device to display, through the display, a visual object comprising the first text and the second text superimposed on a user interface for the application.

According to an embodiment, a method performed by an electronic device may comprise identifying that a call connection with an external electronic device through an application related to a voice over internet protocol (VoIP) is established. The method may comprise, while the call connection is established, obtaining first voice data of a first language type, related to the application. The method may comprise obtaining, based on first text of the first language type converted from the first voice data of the first language type, second text of a second language type distinct from the first language type. The method may comprise displaying, through a display of the electronic device, a visual object comprising the first text and the second text superimposed on a user interface for the application.

According to an embodiment, an electronic device may comprise a speaker, a microphone, a communication circuit, at least one processor comprising processing circuitry, and memory comprising one or more storage media storing instructions. The instructions, when executed by the at least one processor individually or collectively, may cause the electronic device to, while a call connection with an external electronic device through an application related to a voice over internet protocol (VoIP) is established, obtain, using a voice data manager configured for obtaining voice data related to the application, from the application, first voice data of a first language type received from the external electronic device. The instructions, when executed by the at least one processor individually or collectively, may cause the electronic device to provide, using the voice data manager, the first voice data of the first language type to a voice recognizer. The instructions, when executed by the at least one processor individually or collectively, may cause the electronic device to, convert, using the voice recognizer, the first voice data of the first language type into first text of the first language type. The instructions, when executed by the at least one processor individually or collectively, may cause the electronic device to, convert, using a translator, the first text of the first language type into second text data of a second language type distinct from the first language type. The instructions, when executed by the at least one processor individually or collectively, may cause the electronic device to, convert, using a voice converter, the second text of the second language type into second voice data of the second language type. The instructions, when executed by the at least one processor individually or collectively, may cause the electronic device to output the second voice data of the second language type through the speaker.

### Description of the Drawings

FIG. 1 is a block diagram of an electronic device in a network environment according to an embodiment.
FIG. 2 is a simplified block diagram of an electronic device according to an embodiment.
FIG. 3A illustrates an example of a framework of an electronic device for a general call service according to an embodiment.
FIG. 3B illustrates an example of a user interface for a call translation service performed while a general call service is performed.
FIG. 4 illustrates an example of a framework of an electronic device for providing a call translation service in an application related to VoIP according to an embodiment.
FIG. 5A illustrates a flowchart showing an operation of an electronic device according to an embodiment.
FIG. 5B illustrates a flowchart showing an operation of an electronic device according to an embodiment.
FIG. 6A illustrates an example of an operation of an electronic device for providing a call translation service according to an embodiment.
FIG. 6B illustrates an example of an operation of an electronic device for providing a call translation service according to an embodiment.
FIG. 7 illustrates an example of an operation of an electronic device for starting a call translation service according to an embodiment.
FIG. 8 illustrates an example of an operation of an electronic device for setting a function for a call translation service in system settings according to an embodiment.
FIG. 9 illustrates an example of an operation of an electronic device for providing a call translation service while a video call service is provided through an application related to VoIP according to an embodiment.
FIG. 10 illustrates an example of an operation of an electronic device for providing a call translation service while a video call service is provided through an application related to VoIP according to an embodiment.
FIGS. 11A and 11B illustrate an example of a positional relationship between a first housing and a second housing in an unfolded state and a folded state of an electronic device according to an embodiment.
FIG. 11C illustrates an example of a screen for a call translation service displayed based on a positional relationship between a first housing and a second housing according to an embodiment.

### Mode for Invention

Hereinafter, embodiments of the present disclosure will be described in detail with reference to the drawings so that a person having ordinary skill in the art to which the present disclosure belongs may easily practice them. However, the present disclosure may be implemented in various different forms and is not limited to the embodiments described herein. In the description of the drawings, the same or similar reference numerals may be used for the same or similar components. In addition, in the drawings and the related description, descriptions of well-known functions and configurations may be omitted for clarity and conciseness.

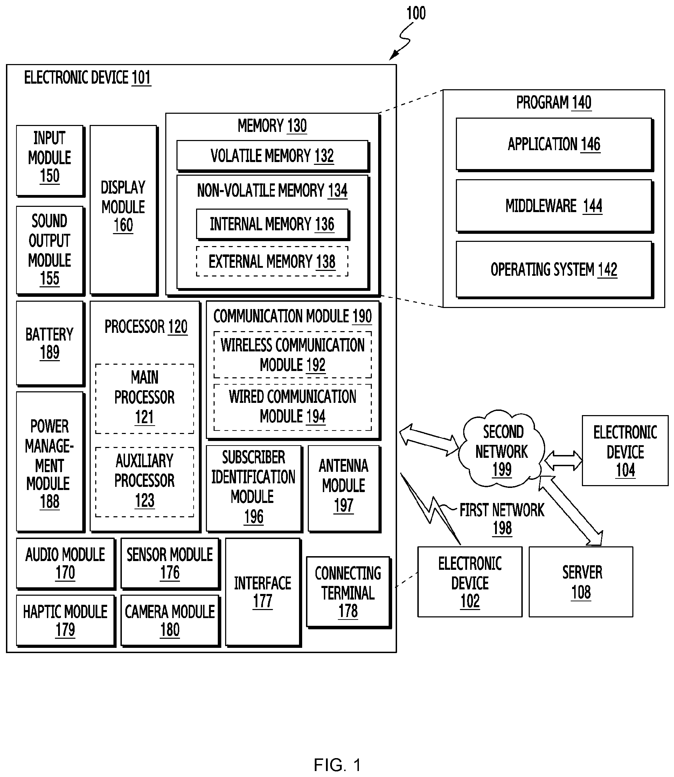

FIG. 1 is a block diagram illustrating an electronic device 101 in a network environment 100 according to various embodiments.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, an HDMI connector, a USB connector, an SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or loT-related technology.

According to an embodiment, an electronic device (e.g., the electronic device 101 of FIG. 1) may execute an application related to a voice over internet protocol (VoIP). The application related to VoIP may be used to establish a call connection with an external electronic device. While the call connection with the external electronic device is established through the application related to VoIP, a user of the electronic device may communicate with a user of the external electronic device. A language type used by the user of the electronic device and a language type used by the user of the external electronic device may be different.

For example, the language type used by the user of the external electronic device may be a first language type, and the language type used by the user of the electronic device may be a second language type. The electronic device may obtain voice data of the first language type from the external electronic device. The electronic device may convert the voice data of the first language type into text of the second language type. The electronic device may provide a service for call translation by displaying the text of the second language type through a display of the electronic device.

However, for the above-described operation, a component for obtaining voice data from an application related to VoIP may be required. Accordingly, in the following description, technical features for providing a service for call translation using a component for obtaining voice data from an application related to VoIP will be described. The same reference numerals described in the following description may indicate the same descriptions.

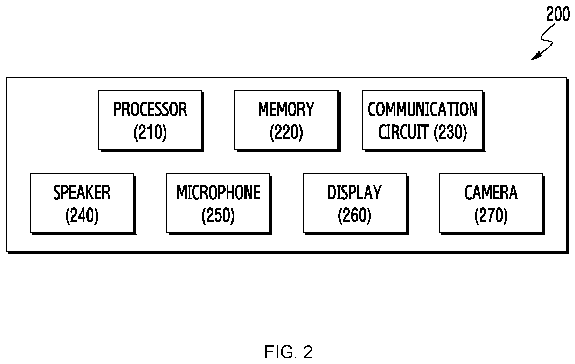

FIG. 2 is a simplified block diagram of an electronic device according to an embodiment.

Referring to FIG. 2, an electronic device 200 may be used to provide a service for call translation. For example, the electronic device 200 may include at least some or all of components of the electronic device 101 of FIG. 1.

According to an embodiment, the electronic device 200 may include a processor 210, memory 220, a communication circuit 230, a speaker 240, a microphone 250, a display 260, and/or a camera 270. According to an embodiment, the electronic device 200 may include at least one of the processor 210, the memory 220, the communication circuit 230, the speaker 240, the microphone 250, the display 260, and the camera 270. For example, at least a portion of the processor 210, the memory 220, the communication circuit 230, the speaker 240, the microphone 250, the display 260, and the camera 270 may be omitted according to an embodiment.

For example, when a video call service is performed in an application related to VoIP, the electronic device 200 may include all of the processor 210, the memory 220, the communication circuit 230, the speaker 240, the microphone 250, the display 260, and the camera 270. For example, when a voice call service is performed in an application related to VoIP, the electronic device 200 may not include the camera 270. For example, when the electronic device 200 is connected to an external electronic device for performing functions of the speaker 240 and/or the microphone 250, the electronic device 200 may not include the speaker 240 and/or the microphone 250.

For example, the electronic device 200 may include at least a portion of the components of the electronic device 101 of FIG. 1. Although not illustrated, the electronic device 200 may include various components in addition to the processor 210, the memory 220, the communication circuit 230, the speaker 240, the microphone 250, the display 260, and the camera 270.

According to an embodiment, the processor 210 may be operatively (or operably) coupled with, or connected with the memory 220, the communication circuit 230, the speaker 240, the microphone 250, the display 260, and the camera 270. The processor 210 being operatively (or operably) coupled with, or connected with the memory 220, the communication circuit 230, the speaker 240, the microphone 250, the display 260, and the camera 270 may mean that the processor 210 is capable of controlling the memory 220, the communication circuit 230, the speaker 240, the microphone 250, the display 260, and the camera 270. For example, the memory 220, the communication circuit 230, the speaker 240, the microphone 250, the display 260, and the camera 270 may be controlled by the processor 210. For example, the processor 210 may correspond to the processor 120 of FIG. 1.

Although illustrated based on different blocks, an embodiment is not limited thereto, and a portion (e.g., at least a portion of the processor 210, the memory 220, the communication circuit 230, the speaker 240, the microphone 250, the display 260, and the camera 270) of hardware of FIG. 2 may be included in a single integrated circuit, such as a system on a chip (SoC).

According to an embodiment, the processor 210 may include at least one processor. For example, the processor 210 may include a main processor performing high-performance processing and an auxiliary processor performing low-power processing.

According to an embodiment, the processor 210 may include a hardware component for processing data based on one or more instructions. The hardware component for processing data may include, for example, an arithmetic and logic unit (ALU), a field programmable gate array (FPGA), and/or a central processing unit (CPU).

For example, the processor 210 may include an application processor, a supplementary processor (e.g., a sensor hub, a microcontroller unit (MCU)), a central processor unit (CPU), a neural processing unit (NPU), or a graphic processing unit (GPU), and/or a processor for IoT (e.g., a processor integrated with a communication module).

According to an embodiment, the memory 220 of the electronic device 200 may include a circuit and/or a storage medium for storing data and/or instructions input to and/or output from the processor 210. The memory 220 may include, for example, a volatile memory such as a random-access memory (RAM) and/or a non-volatile memory such as a read-only memory (ROM). The non-volatile memory may be referred to as storage. The volatile memory may include, for example, at least one of a dynamic RAM (DRAM), a static RAM (SRAM), a Cache RAM, or a pseudo SRAM (PSRAM). The non-volatile memory may include, for example, at least one of a programmable ROM (PROM), an erasable PROM (EPROM), an electrically erasable PROM (EEPROM), a flash memory, a hard disk, a compact disk, a solid state drive (SSD), or an embedded multi media card (eMMC). The processor 210 of the electronic device 200 may execute instructions of the memory 220 in the electronic device 200 and perform functions and/or operations indicated by the instructions. For example, when the electronic device 200 includes at least one processor, the at least one processor may be configured to execute the instructions collectively or individually. For example, the memory 220 may correspond to the memory 130 of FIG. 1.

According to an embodiment, the communication circuit 230 may correspond to at least a portion of the communication module 190 of FIG. 1. For example, the communication circuit 230 may be used for various radio access technologies (RATs). For example, the communication circuit 230 may be used to perform bluetooth communication, wireless local area network (WLAN) communication, zigbee communication, near field communication (NFC), ultra wide band (UWB) communication, or ANT+ communication. For example, the communication circuit 230 may be used to perform cellular communication. According to an embodiment, the communication circuit 230 may be configured to be integrated with the processor 210.

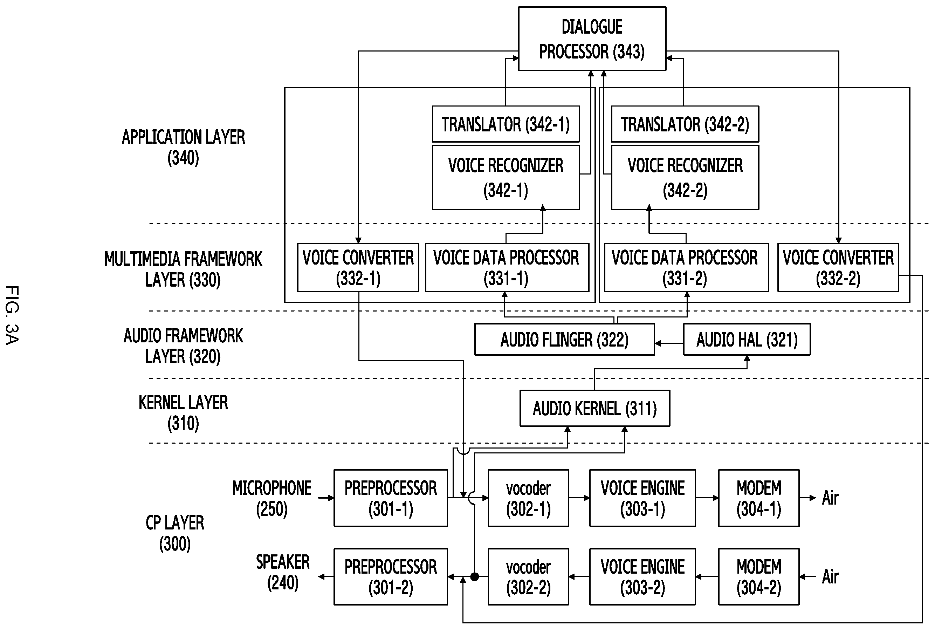

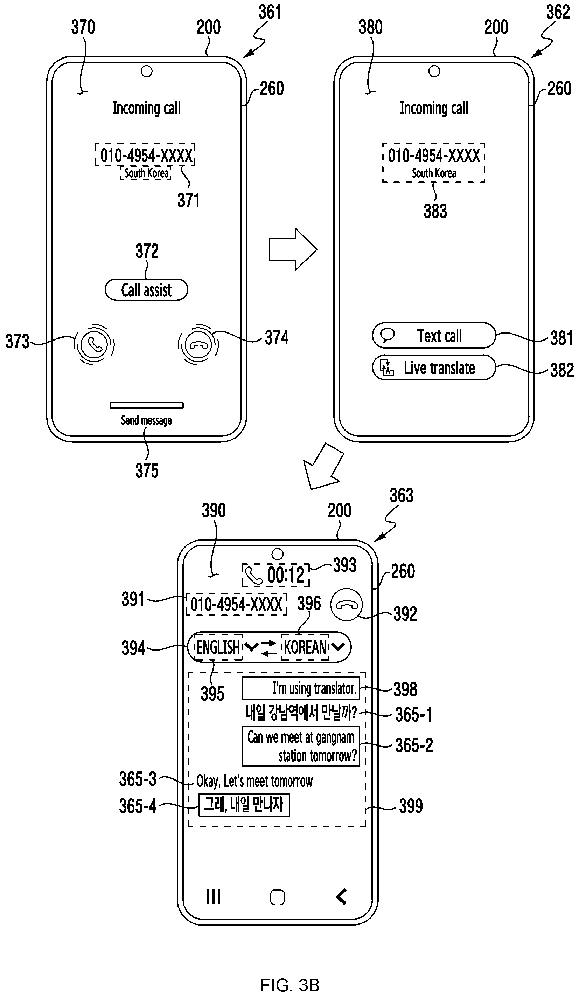

For example, when a general call service is performed, the processor 210 may transmit voice data (or video data) of a user as an analog signal using the communication circuit. The processor 210 (e.g., a communication processor (CP)) may transmit the analog signal to a public switched telephone network (PSTN), and the PSTN may convert the received analog signal into a digital signal and then transmit the digital signal to an external electronic device. The general call service may be referred to as a communication processor (CP) call service. A framework for the general call service and a specific example of a call translation service performed in the general call service will be described below in FIG. 3A and FIG. 3B.

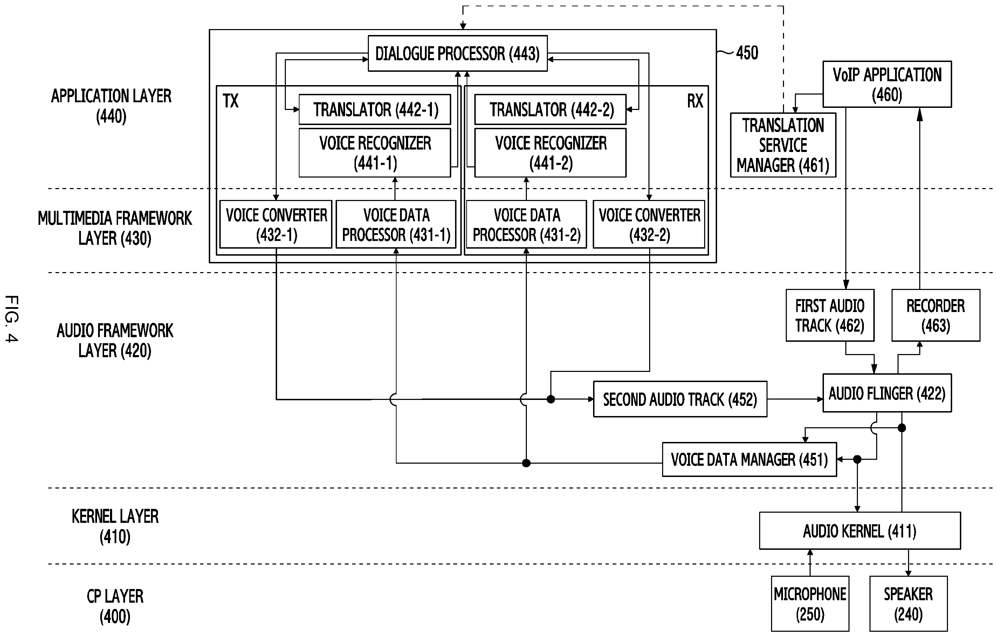

For example, the processor 210 may establish, using the communication circuit 230, a call connection with the external electronic device by using a voice over internet protocol (VoIP) call path provided through a server. When the call connection with the external electronic device is established using the VoIP call path, the electronic device 200 may transmit voice data (or video data) as a digital signal. A framework for a VoIP call service and a specific example of a call translation service performed in the VoIP call service will be described below in FIG. 4A and FIG. 4B.

According to an embodiment, the speaker 240 may be used to output (or provide) sound. The processor 210 may receive an audio signal received from the external electronic device and output the received audio signal through the speaker 240. For example, the speaker 240 may correspond to the sound output module 155 of FIG. 1.

According to an embodiment, the electronic device 200 may include the microphone 250. The microphone 250 may identify an electrical signal corresponding to vibration of air. For example, the processor 210 may obtain, using the microphone 250, an audio signal (for example, voice of a user) from the user. The processor 210 may transmit the audio signal obtained from the user to the external electronic device.

According to an embodiment, the display 260 may output visualized information to a user. The display 260 may include a liquid crystal display (LCD), a plasma display panel (PDP), one or more light emitting diodes (LEDs), and/or one or more organic light emitting diodes (OLEDs). According to an embodiment, the display 260 may include a sensor (e.g., a touch sensor panel (TSP)) for detecting an external object (e.g., a finger of a user) on the display 260. For example, the display 260 may correspond to the display module 160 of FIG. 1.

According to an embodiment, the electronic device 200 may include the camera 270. For example, the camera 270 may correspond to at least a portion of the camera module 180 of FIG. 1. For example, the camera 270 may include at least one camera. For example, the camera 270 may include one or more optical sensors (e.g., a charged coupled device (CCD) sensor or a complementary metal oxide semiconductor (CMOS) sensor) generating an electrical signal representing color and/or brightness of light. A plurality of optical sensors included in the camera 270 may be disposed in a form of a 2 dimensional array. The camera 270 may substantially simultaneously obtain electrical signals of each of the plurality of optical sensors and generate 2 dimensional frame data corresponding to light reaching the optical sensors of the 2 dimensional array. For example, image data captured using the camera 270 may mean a 2 dimensional frame data obtained from the camera 270. For example, video data captured using the camera 270 may mean a sequence of a plurality of 2 dimensional frame data obtained from the camera 270.

FIG. 3A illustrates an example of a framework of an electronic device for a general call service according to an embodiment.

Referring to FIG. 3A, a communication processor (CP) layer 300, a kernel layer 310, an audio framework layer 320, a multimedia framework layer 330, and an application layer 340 may be configured for a call translation service for a general call service (or a CP call service).

According to an embodiment, the general call service may be performed in the CP layer 300. For example, when a call connection for the general call service is established, a processor 210 may transmit voice data to an external electronic device. Specifically, the processor 210 (e.g., CP) may obtain, using a microphone 250, voice data from a user of an electronic device 200. The processor 210 may preprocess the voice data using a preprocessor 301-1. The processor 210 may perform modulation and/or demodulation of the voice data using a vocoder 302-1. The processor 210 may perform processing of the voice data using a voice engine 303-1. The processor 210 may transmit the voice data to the external electronic device through a modem 304-1.

For example, when a call connection for the general call service is established, the processor 210 may receive voice data from the external electronic device. Specifically, the processor 210 (e.g., CP) may receive voice data from the external electronic device through a modem 304-2. The processor 210 may perform processing of the voice data using a voice engine 303-2. The processor 210 may perform modulation and/or demodulation of the voice data using a vocoder 302-2. The processor 210 may preprocess the voice data using a preprocessor 301-2. The processor 210 may output the voice data using a speaker 240.

According to an embodiment, while the general call service (or the CP call service) is performed, the processor 210 may provide a call translation service. To provide the call translation service, the processor 210 may obtain second voice data of a second language type based on first voice data of a first language type received from the external electronic device. The processor 210 may output the second voice data of the second language type through the speaker 240. To provide the call translation service, the processor 210 may obtain fourth voice data of the first language type based on third voice data of the second language type received through the microphone 250 of the electronic device 200. The processor 210 may transmit the fourth voice data to the external electronic device.

For example, the processor 210 may deliver the first voice data of the first language type obtained through the vocoder 302-2 to an audio kernel 311. The processor 210 may provide the first voice data to a voice data processor 331-2 through the audio kernel 311, an audio hardware abstraction layer (HAL) 321, and an audio flinger 322. The processor 210 may perform recording of the first voice data using the voice data processor 331-2. The processor 210 may provide the first voice data to a voice recognizer 341-2 through the voice data processor 331-2. The processor 210 may identify (or determine) a language type of the first voice data as the first language type using the voice recognizer 341-2. The processor 210 may obtain first text of the first language type based on the first voice data of the first language type using the voice recognizer 341-2. The processor 210 may convert the first text of the first language type into second text of the second language type using a translator 342-2. The processor 210 may provide the second text to a voice converter 332-2 through a dialogue processor 343. The processor 210 may obtain the second voice data of the second language type based on the second text of the second language type using the voice converter 332-2. The processor 210 may output the second voice data of the second language type through the speaker 240 by providing the second voice data of the second language type to the preprocessor 301-2.

For example, the processor 210 may deliver the third voice data of the second language type obtained through the preprocessor 301-1 to the audio kernel 311. The processor 210 may provide the third voice data to a voice data processor 331-1 through the audio kernel 311, the audio hardware abstraction layer (HAL) 321, and the audio flinger 322. The processor 210 may perform recording of the third voice data using the voice data processor 331-1. The processor 210 may provide the third voice data to a voice recognizer 341-1 through the voice data processor 331-1. The processor 210 may identify (or determine) a language type of the third voice data as the second language type using the voice recognizer 341-1. The processor 210 may obtain third text of the second language type based on the third voice data of the second language type using the voice recognizer 341-1. The processor 210 may convert the third text of the second language type into fourth text of the first language type using a translator 342-1. The processor 210 may provide the fourth text to a voice converter 332-1 through the dialogue processor 343. The processor 210 may obtain the fourth voice data of the first language type based on the fourth text of the first language type using the voice converter 332-1. The processor 210 may transmit the fourth voice data of the first language type to the external electronic device by providing the fourth voice data of the first language type to the vocoder 302-1.

As described above, while the general call service (or the CP call service) is performed, to perform the call translation service, the processor 210 may convert the first voice data of the first language type received from the external electronic device into the second voice data of the second language type, and output the second voice data using the speaker 240. In addition, while the general call service (or the CP call service) is performed, to perform the call translation service, the processor 210 may convert the third voice data of the second language type obtained through the microphone 250 into the fourth voice data of the first language type, and transmit the fourth voice data to the external electronic device. An example of a user interface in which the call translation service is performed while the general call service is performed will be described below in FIG. 3B.

FIG. 3B illustrates an example of a user interface for a call translation service performed while a general call service is performed.

Referring to FIG. 3B, in a state 361, a processor 210 of an electronic device 200 may receive a call through a basic call service (or a CP call service). The processor 210 may display a screen 370 through a display 260 in response to receiving the call through the basic call service. The screen 370 may be displayed to indicate that the call is received from an external electronic device through the basic call service. The screen 370 may include an element 371 indicating caller information, an object 372 for setting a call assistance function during a call connection, an object 373 for answering the call, an object 374 for rejecting the call, and/or an object 375 for transmitting a text message to the external electronic device.

According to an embodiment, the processor 210 may change a state of the electronic device 200 from the state 361 to a state 362 based on an input for the object 372.

In the state 362, the processor 210 may display, through the display 260, a screen 380 for indicating the call assistance function. The screen 380 may include an element 383 indicating caller information. The screen 380 may include an object 381 for performing a service for calling through text and/or an object 382 for performing a call translation service.

According to an embodiment, the processor 210 may change a state of the electronic device 200 from the state 362 to a state 363 based on an input for the object 382. For example, the processor 210 may establish a call connection for an incoming call from the external electronic device based on the input for the object 382.

In the state 363, the processor 210 may display, through the display 260, a screen 390 for providing the call translation service. The screen 390 may include an element 391 indicating caller information, an object 392 for terminating the call connection, an element 393 indicating a time during which the call connection is maintained, an object 394 for setting a target language for translation, and/or an area 399 for call translation.

For example, the object 394 may include an element 395 and an element 396 indicating the target language for translation. As an example, the element 395 may indicate English. The element 396 may indicate Korean. The target languages for translation designated according to the element 395 and the element 396 may be changed according to a user setting.

For example, the area 399 may be configured to display an utterance of a user of the electronic device 200 and an utterance of an external user of the external electronic device. The processor 210 may display, in the area 399, text 398 indicating that the call translation service is performed, based on a start of the call translation service. The text 398 may be converted into voice data and may be transmitted to the external electronic device through the call connection.

The processor 210 may display text 365-1 indicating an utterance of the user of the electronic device 200 in the area 399. When the text 365-1 is Korean, the processor 210 may translate the text 365-1 in Korean into English. The processor 210 may display text 365-2 in English corresponding to the text 365-1 in Korean in the area 399. The processor 210 may transmit voice data (or the utterance of the user) corresponding to the text 365-1 and voice data corresponding to the text 365-2 to the external electronic device.

For example, the processor 210 may receive voice data from the external user. The processor 210 may display text 365-3 for the received voice data. When the text 365-3 is English, the processor 210 may translate the text 365-3 into Korean. The processor 210 may display text 365-4 in Korean corresponding to the text 365-3 in English in the area 399. The processor 210 may output voice data (or an utterance of the external user) corresponding to the text 365-3 and voice data corresponding to the text 365-4 through a speaker 240.

FIG. 4 illustrates an example of a framework of an electronic device for providing a call translation service in an application related to VoIP according to an embodiment.

Referring to FIG. 4, a processor 210 of an electronic device 200 may include a framework for providing a call translation service while a call connection is established in a VoIP application 460 (or an application related to VoIP). For example, while the call connection is established in the VoIP application 460 (or the application related to VoIP), a communication processor (CP) layer 400, a kernel layer 410, an audio framework layer 420, a multimedia framework layer 430, and an application layer 440 may be configured to provide the call translation service. For example, the CP layer 400 may include a speaker 240 and/or a microphone 250. The kernel layer 410 may include an audio kernel 411. The audio framework layer 420 may include a first audio track 462, a recorder 463, an audio flinger 422, a second audio track 452, and/or a voice data manager 451. The multimedia framework layer 430 may include a voice converter 432-1, a voice converter 432-2, a voice data processor 431-1, and/or a voice data processor 431-2. The application layer 440 may include the VoIP application 460, a translation service manager 461, a translator 442-1, a translator 442-2, a voice recognizer 441-1, a voice recognizer 441-2, and/or a dialogue processor 443. According to an embodiment, components (or blocks) included in each layer may be changed. For example, the translation service manager 461 may be included in the multimedia framework layer 430. For example, at least some of the first audio track 462, the second audio track 452, and/or the recorder 463 may be included in the multimedia framework layer 430.

According to an embodiment, a call connection related to VoIP may be established in the VoIP application 460. When the call connection related to VoIP is established, the processor 210 may transmit voice data to an external electronic device through the VoIP application 460. For example, the processor 210 may obtain, using the microphone 250, voice data from a user of the electronic device 200. The processor 210 may deliver the voice data to the audio flinger 422 using the audio kernel 411. The processor 210 may deliver the voice data obtained from the audio flinger 422 to the VoIP application 460 through the recorder 463. The processor 210 may deliver the voice data to the external electronic device through the call connection related to VoIP, using the VoIP application 460. For example, the audio kernel 411 may be configured to transmit and receive audio data between hardware (e.g., the microphone 250 and/or the speaker 240) and the audio flinger 422. For example, the audio flinger 422 may be configured to mix audio data or provide a path for delivering audio data to a call translation service provider 450, the audio kernel 411, and/or the VoIP application 460.

When the call connection related to VoIP is established, the processor 210 may receive voice data from the external electronic device through the VoIP application 460. For example, the processor 210 may deliver, using the VoIP application 460, the voice data received from the external electronic device to the first audio track 462. The processor 210 may deliver the voice data to the audio flinger 422 through the first audio track 462. The processor 210 may deliver the voice data to the audio kernel 411 through the audio flinger 422. The processor 210 may deliver the voice data to the speaker 240 through the audio kernel 411. The processor 210 may output the voice data using the speaker 240.

Generally, when only a call service (or a VoIP call service) through the VoIP application 460 is performed, since the VoIP application 460 is a third party application, a path for delivering audio data (e.g., received voice data and/or transmitted voice data) related to the VoIP application 460 to the translators 442-1 and 442-2 may not be configured. As the voice data manager 451 is additionally configured in the electronic device 200, the processor 210 may obtain voice data related to the VoIP application 460 and deliver the obtained voice data to the translators 442-1 and 442-2. The processor 210 may provide the call translation service by delivering the voice data to the translators 442-1 and 442-2. For example, a path between the VoIP application 460, which is a third party application, and the call translation service provider 450 may be provided through the voice data manager 451 and/or the second audio track 452.

Hereinafter, an operation for obtaining voice data related to the VoIP application 460 using the voice data manager 451 and/or the second audio track 452 and providing the call translation service based on the obtained voice data will be described.

According to an embodiment, while the call connection related to VoIP is established through the VoIP application 460, the processor 210 may obtain second voice data of a second language type based on first voice data of a first language type received from the external electronic device, to provide the call translation service. The processor 210 may output the second voice data of the second language type through the speaker 240. To provide the call translation service, the processor 210 may obtain fourth voice data of the first language type based on third voice data of the second language type received through the microphone 250 of the electronic device 200. The processor 210 may transmit the fourth voice data to the external electronic device.

According to an embodiment, when the call connection related to VoIP is established, the processor 210 may deliver (or provide), through the translation service manager 461, information indicating that the call connection related to VoIP is established to the call translation service provider 450. The translation service provider 450 may activate the call translation service based on the received information. For example, while the call connection related to VoIP is established, the translation service manager 461 may transmit information for activating the translation service provider 450 based on an input (or a user input) instructing to start the call translation service.

For example, the VoIP application 460 may be one of applications authorized for the call translation service. For example, at least some of applications for providing a VoIP call connection may provide authority for providing the call translation service. The VoIP application 460 may provide authority for providing the call translation service. According to an embodiment, the VoIP application 460 may be one of the applications for providing a VoIP call connection.

For example, when information indicating that a start of an call translation service signifies that a call connection related to VoIP has been established is delivered from the translation service manager 461 to the call translation service provider 450, the processor 210 may identify that the VoIP application 460 is an application authorized to provide the call translation service. According to an embodiment, based on identifying that the VoIP application 460 is not an application authorized to provide the call translation service, the call translation service may not be provided.

According to an embodiment, although the translation service manager 461 is illustrated as being distinguished from the VoIP application 460, the present disclosure is not limited thereto. For example, the translation service manager 461 may be included in the VoIP application 460. According to an embodiment, the translation service manager 461 may be included in the translation service provider 450.

For example, while the call connection related to VoIP is established through the VoIP application 460, the processor 210 may obtain the first voice data from the external electronic device through the call connection. The processor 210 may deliver (or provide) the first voice data to the audio flinger 422 through the first audio track 462. The processor 210 may deliver (or provide) the first voice data to the voice data manager 451 using the audio flinger 422. The voice data manager 451 may obtain the first voice data from the audio flinger 422. The voice data manager 451 may deliver (or provide) the first voice data to the voice data processor 431-2. The processor 210 may perform recording of the first voice data using the voice data processor 431-2. The processor 210 may deliver (or provide) the first voice data to the voice recognizer 441-2 through the voice data processor 431-2. The processor 210 may identify (or determine) a language type of the first voice data as the first language type using the voice recognizer 441-2. The processor 210 may obtain first text of the first language type based on the first voice data of the first language type using the voice recognizer 441-2. The processor 210 may provide the first text of the first language type to the translator 442-2 through the dialogue processor 443. The processor 210 may convert the first text of the first language type into second text of the second language type using the translator 442-2. For example, the first language type and the second language type may be changed according to setting of a user. As an example, the second language type may be set based on an input of the user (or a target language type set by the user). For example, the first language type may be set based on voice data. The processor 210 may determine the first language type based on the voice data. For example, the second language type may correspond to a language type set as a default language in the electronic device 200.

The processor 210 may provide the second text to the voice converter 432-2 through the dialogue processor 443. The processor 210 may obtain the second voice data of the second language type based on the second text of the second language type using the voice converter 432-2. The processor 210 may output the second voice data of the second language type through the speaker 240 by providing the second voice data of the second language type to the audio kernel 411 through the second audio track 452 and the audio flinger 422.

According to an embodiment, a method in which the second voice data of the second language type is output may be changed according to a user setting (e.g., setting information of the translation service manager 461). For example, while outputting the first voice data of the first language type through the speaker 240, the processor 210 may output the second voice data of the second language type together through the speaker 240. As an example, a volume at which the first voice data is output may be smaller than a volume at which the second voice data is output. For example, the processor 210 may output only the second voice data of the second language type through the speaker 240 without outputting the first voice data of the first language type. For example, the processor 210 may output the second voice data of the second language type through the speaker 240 after the first voice data of the first language type is output.

According to an embodiment, the processor 210 may transmit the second voice data of the second language type to the external electronic device by providing the second voice data of the second language type to the VoIP application 460 through the audio flinger 422. The processor 210 may transmit the second voice data of the second language type to the external electronic device to notify that the first voice data received from the external electronic device is being provided to the user of the electronic device 200 after being translated.

For example, while the call connection related to VoIP is established through the VoIP application 460, the processor 210 may obtain the third voice data from the user of the electronic device 200 through the microphone 250. The processor 210 may deliver (or provide) the third voice data to the voice data manager 451 through the audio kernel 411. The voice data manager 451 may deliver (or provide) the third voice data to the voice data processor 431-1. The processor 210 may perform recording of the third voice data using the voice data processor 431-1. The processor 210 may deliver (or provide) the third voice data to the voice recognizer 441-1 through the voice data processor 431-1. The processor 210 may identify (or determine) a language type of the third voice data as the second language type using the voice recognizer 441-1. The processor 210 may obtain third text of the second language type based on the third voice data of the second language type using the voice recognizer 441-1. The processor 210 may provide the third text of the second language type to the translator 442-2 through the dialogue processor 443. The processor 210 may convert the third text of the second language type into fourth text of the first language type using the translator 442-1. The processor 210 may provide the fourth text to the voice converter 432-1 through the dialogue processor 443. The processor 210 may obtain the fourth voice data of the first language type based on the fourth text of the first language type using the voice converter 432-1. The processor 210 may transmit the fourth voice data of the first language type to the external electronic device through the call connection related to VoIP, using the VoIP application 460, by providing the fourth voice data of the first language type to the audio flinger 422 through the second audio track 452.

As described above, the translation service provider 450 may perform a mixing operation so that translated voice data may be output through the speaker 240 or transmitted to the external electronic device. The dialogue processor 443 may provide translated text to the voice converters 432-1 and 432-2 so that the translated text is converted into voice data and transmitted to the external electronic device, or displayed in the electronic device 200. The voice recognizers 441-1 and 441-2 may be configured to convert voice data into text in units of sentences. The voice recognizers 441-1 and 441-2 may be referred to as automatic speech recognition (ASR). The voice converters 432-1 and 432-2 may be configured to convert text into voice data. The voice converters 432-1 and 432-2 may be referred to as text to speech (TTS). The voice data processors 431-1 and 431-2 may be configured to obtain voice data and provide the obtained voice data to the voice recognizers 441-1 and 441-2.

For example, the audio flinger 422 may perform a mixing operation so that voice data obtained from text using the voice converters 432-1 and 432-2 is output through the speaker 240 or transmitted to the external electronic device. The voice data manager 451 may be configured to obtain voice data related to the VoIP application 460 and deliver the obtained voice data to the call translation service provider 450. The voice data manager 451 may provide a path for delivering the voice data related to the VoIP application 460 to the translation service provider 450 and for delivering the translated voice data to the VoIP application 460. The processor 210 may provide a call translation service for the call connection related to VoIP established through the VoIP application 460, which is a third party application, using the path provided through the voice data manager 451.

A framework structure of the electronic device 200 illustrated in FIG. 4 is exemplary, and at least some of the components illustrated in FIG. 4 may be changed. For example, the translator 442-1 and the translator 442-2 may be configured as one translator. For example, the voice recognizer 441-1 and the voice recognizer 441-2 may be configured as one voice recognizer. For example, the voice converter 432-1 and the voice converter 432-2 may be configured as one voice converter. For example, the voice data processor 431-1 and the voice data processor 431-2 may be configured as one voice data processor. For example, the voice recognizer 441-1 and the translator 442-1 may be configured as one component (or block). For example, the voice recognizer 441-2 and the translator 442-2 may be configured as one component (or block). For example, the voice recognizer 441-1, the translator 442-1, the voice recognizer 441-2, and the translator 442-2 may be configured as one component (or block).

In FIG. 4, although the call translation service provider 450 is illustrated as being included in the electronic device 200, this is only an example. According to an embodiment, the call translation service provider 450 may be included in an external server (e.g., the server 108 of FIG. 1). For example, the call translation service provider 450 may be stored in memory of the external server. The electronic device 200 may transmit text extracted from an audio signal to the server through a communication circuit (e.g., the communication module 190 of FIG. 1). Thereafter, the electronic device 200 may receive translated text information from the server through the communication circuit. According to an embodiment, to obtain the translated text information, the electronic device 200 may transmit the audio signal, together with the text extracted from the audio signal, to the server.

According to an embodiment, when the call translation service provider 450 is included in the external server, the processor 210 of the electronic device 200 may transmit the first voice data to the external server. The external server may obtain first text of a first language type based on the first voice data. The external server may convert the first text of the first language type into second text of a second language type. The external server may obtain second voice data of the second language type based on the second text of the second language type. The external server may transmit the second voice data of the second language type to the electronic device 200. The electronic device 200 may obtain the second voice data of the second language type from the external server.

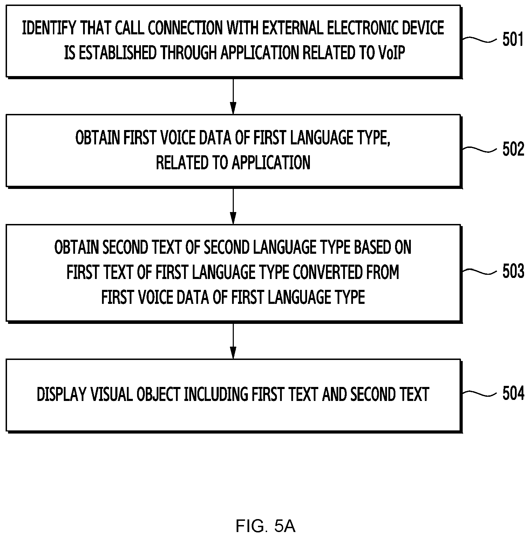

FIG. 5A illustrates a flowchart showing an operation of an electronic device according to an embodiment. In the following embodiment, each of operations may be performed sequentially, but is not necessarily performed sequentially. For example, an order of each of the operations may be changed, and at least two operations may be performed in parallel.

In operation 501, a processor 210 may identify that a call connection with an external electronic device is established through an application related to VoIP. For example, the application related to VoIP may be used to provide at least one of a voice call service and a video call service. The application related to VoIP may be used to establish a call connection related to VoIP with the external electronic device. The application related to VoIP may provide at least one of a voice call service and a video call service through the call connection related to VoIP. For example, the application related to VoIP may be a third party application. For example, the application related to VoIP may be configured to operate based on IP.

In operation 502, the processor 210 may obtain first voice data of a first language type, related to the application related to VoIP. For example, while the call connection is established, the processor 210 may obtain the first voice data of the first language type (e.g., English). The processor 210 may obtain the first voice data from the application related to VoIP. The processor 210 may identify a language type of the first voice data as the first language type.

According to an embodiment, the processor 210 may identify whether voice data is obtained from the application related to VoIP. The processor 210 may initialize at least one component (e.g., the translation service provider 450 of FIG. 4) for a call translation service based on obtaining the voice data from the application related to VoIP. As an example, the processor 210 may initialize a voice recognizer (e.g., the voice recognizer 441-1 or the voice recognizer 441-2 of FIG. 4) to identify the language type of the first voice data obtained from the application related to VoIP.

In operation 503, the processor 210 may obtain second text of a second language type (e.g., Korean) based on first text of the first language type converted from the first voice data of the first language type (e.g., English). For example, the processor 210 may obtain the second text of the second language type distinct from the first language type, based on the first text of the first language type converted from the first voice data of the first language type.

According to an embodiment, the processor 210 may obtain the first text of the first language type from the first voice data of the first language type. The processor 210 may perform speech recognition on the first voice data. The processor 210 may convert the first voice data into the first text using a voice recognizer (e.g., the voice recognizer 441-1 or the voice recognizer 441-2 of FIG. 4). The processor 210 may segment the first voice data in units of sentences. The processor 210 may convert the first voice data segmented in units of sentences into the first text. The language type of the first voice data and a language type of the first text may be the same as the first language type.

According to an embodiment, the processor 210 may obtain the second text of the second language type based on the first text of the first language type. For example, the processor 210 may obtain the second text of the second language type by translating the first text of the first language type using a translator (e.g., the translator 442-1 or the translator 442-2 of FIG. 4).

For example, the second language type may be changed according to setting information of an electronic device 200. The second language type may be set as a language type set in a system of the electronic device 200. For example, the second language type may be changed according to a user input.

In operation 504, the processor 210 may display a visual object including the first text and the second text. For example, the processor 210 may display, through a display 260, the visual object including the first text and the second text superimposed on a user interface for the application related to VoIP.

For example, the processor 210 may display the visual object for providing the call translation service, superimposed on the user interface for the application related to VoIP by using an application distinguished from the application related to VoIP. As an example, since the visual object is displayed superimposed on the user interface for the application related to VoIP, the visual object may be displayed in a semi-transparent state. As an example, the visual object may be movable in a state in which it is superimposed on the user interface. As an example, the processor 210 may display the visual object on an area distinguished from a main area for a call (e.g., an area indicating a user of the external electronic device and/or a user of the electronic device 200) in the user interface for the application related to VoIP.

For example, the processor 210 may display the first text in the visual object in response to outputting the first voice data through a speaker 240. The processor 210 may output second voice data through the speaker 240 after the first voice data is output through the speaker 240. As an example, a volume at which the first voice data is output may be smaller than a volume at which the second voice data is output. The processor 210 may output the first voice data through the speaker 240 based on a first volume. The processor 210 may output the second voice data through the speaker 240 based on a second volume greater than the first volume. However, the present disclosure is not limited thereto. According to an embodiment, the second volume may correspond to the first volume.

The processor 210 may display the second text in the visual object in response to outputting the second voice data through the speaker 240. The second text corresponding to the second voice data may be displayed after the first text is displayed in the visual object.

For example, a display format of the first text and a display format of the second text may be distinguished. The processor 210 may set the display format of the first text and the display format of the second text differently to distinguish the first text according to the first voice data obtained from the external electronic device and the second text into which the first text is translated. The processor 210 may set the display format of the first text and the display format of the second text differently by setting at least one of a color, a thickness, a shading, a surrounding effect, and a display position differently.

According to an embodiment, the visual object including the first text and the second text may include an area for providing a handwriting input. The processor 210 may identify a handwriting input from the user of the electronic device 200 in the area. The processor 210 may identify text according to the handwriting input. The processor 210 may transmit voice data obtained from the text according to the handwriting input to the external electronic device. For example, a language type of the text according to the handwriting input may be the second language type. The processor 210 may obtain text of the first language type by translating the text. The processor 210 may transmit voice data of the first language type obtained based on the text of the first language type to the external electronic device.

According to an embodiment, the processor 210 may display a virtual keyboard based on an input (e.g., a tap input) to the area for providing a handwriting input. The processor 210 may obtain text of the second language type using the virtual keyboard. The processor 210 may obtain text of the first language type by translating the text. The processor 210 may transmit voice data of the first language type obtained based on the text of the first language type to the external electronic device. In this case, the user of the electronic device 200 may communicate with a user of the external electronic device using a text input.

According to an embodiment, the visual object for providing the call translation service may be displayed based on an input for displaying the visual object. For example, while the call connection is established through the application related to VoIP, the processor 210 may identify the input for displaying the visual object. The processor 210 may display, in response to the input, the visual object for providing the call translation service, superimposed on the user interface. According to an embodiment, the processor 210 may display the user interface for the application related to VoIP and the visual object in parallel in a display area of the display 260, based on the input for displaying the visual object. For example, the processor 210 may display the user interface for the application related to VoIP in a first display area of the display area of the display 260, and display the visual object for providing the call translation service in a second display area of the display area of the display 260. For example, the processor 210 may, based on the input, reduce a size of the user interface for the application related to VoIP and display the visual object for providing the call translation service together with the user interface.

According to an embodiment, the processor 210 may obtain third voice data of the second language type through a microphone 250. The processor 210 may obtain third text of the second language type from the third voice data of the second language type. The processor 210 may obtain fourth text of the first language type using a translator based on the third text of the second language type. The processor 210 may obtain fourth voice data of the first language type based on the fourth text of the first language type. The processor 210 may transmit the fourth voice data to the external electronic device through the call connection related to VoIP.

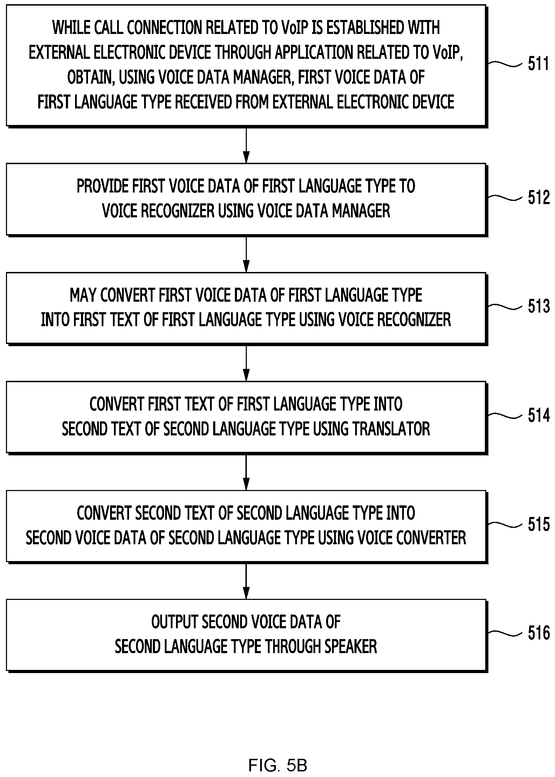

FIG. 5B illustrates a flowchart showing an operation of an electronic device according to an embodiment. In the following embodiment, each of operations may be performed sequentially, but is not necessarily performed sequentially. For example, an order of each of the operations may be changed, and at least two operations may be performed in parallel.

In operation 511, while a call connection related to VoIP is established with an external electronic device through an application related to VoIP, a processor 210 may obtain, using a voice data manager (e.g., the voice data manager 451 of FIG. 4), first voice data of a first language type received from the external electronic device. For example, while the call connection with the external electronic device is established through the application related to VoIP, the processor 210 may obtain, using the voice data manager configured to obtain voice data related to the application related to VoIP, the first voice data of the first language type received from the external electronic device from the application related to VoIP.

According to an embodiment, the processor 210 may identify that the call connection related to VoIP is established with the external electronic device through the application related to VoIP. The processor 210 may transmit voice data obtained through a microphone 250 to the external electronic device and output voice data obtained from the external electronic device through a speaker 240, using the application related to VoIP.

To provide a call translation service, the processor 210 may obtain voice data related to the application related to VoIP. For example, the processor 210 may identify whether voice data is exchanged with the external electronic device through the application related to VoIP. The processor 210 may obtain voice data based on identifying that voice data is exchanged with the external electronic device through the application related to VoIP. According to an embodiment, when only video data not including voice data is exchanged with the external electronic device through the application related to VoIP, the processor 210 may not obtain voice data. Even when sound data is exchanged with the external electronic device through the application related to VoIP, when the sound data includes information distinguished from human voice, the processor 210 may not provide the call translation service. The processor 210 may identify (or detect) voice data related to the application related to VoIP, and may provide the call translation service based on identification (or detection) of the voice data. According to an embodiment, the processor 210 may initialize a component (or a module) for providing the call translation service based on identification (or detection) of the voice data. For example, the component for providing the call translation service may include a translation service provider (e.g., the translation service provider 450 of FIG. 4). As an example, the processor 210 may initialize at least one of a text converter, a translator, and/or a voice converter included in the translation service provider based on identification (or detection) of the voice data.

For example, the voice data related to the application related to VoIP may include the first voice data received from the external electronic device and third voice data obtained through the microphone 250.

For example, the processor 210 may obtain the first voice data and the third voice data using the voice data manager (e.g., the voice data manager 451 of FIG. 4). The processor 210 may deliver (or provide) the first voice data and the third voice data to the translation service provider (e.g., the translation service provider 450 of FIG. 4) through the voice data manager.

According to an embodiment, the processor 210 may deliver (or provide) the first voice data and the third voice data to the translation service provider in a state in which the first voice data and the third voice data are separated, without performing mixing of the first voice data and the third voice data. According to an embodiment, when an additional operation such as call recording is performed, the processor 210 may deliver (or provide) the first voice data and the third voice data to the translation service provider in a state in which mixing of the first voice data and the third voice data is performed.

According to an embodiment, the processor 210 may identify a language type of the first voice data. The processor 210 may identify the language type of the first voice data as the first language type (e.g., English). The processor 210 may determine a target language type for the call translation service based on identifying the language type of the first voice data as the first language type. The processor 210 may determine the target language type for the call translation service based on identifying a language type according to a system setting as a second language type.

According to an embodiment, the processor 210 may determine the target language type for the call translation service based on identifying a language type of the third voice data as the second language type. According to an embodiment, the target language type for the call translation service may be set based on at least one of obtained voice data, a user setting, a designated input, and/or system setting information.

According to an embodiment, the processor 210 may determine target language types for the call translation service as the first language type and the second language type. As an example, the processor 210 may provide the call translation service for providing voice data of the second language type based on voice data of the first language type, and providing voice data of the first language type based on voice data of the second language type.

In operation 512, the processor 210 may provide the first voice data of the first language type to a voice recognizer (e.g., the voice recognizer 441-1 or the voice recognizer 441-2 of FIG. 4) using the voice data manager. The processor 210 may provide the first voice data obtained from the application related to VoIP (or the third voice data obtained through the microphone 250) to the voice recognizer using the voice data manager.

In operation 513, the processor 210 may convert the first voice data of the first language type into first text of the first language type using the voice recognizer. The processor 210 may segment the first voice data of the first language type in units of sentences using the voice recognizer. The processor 210 may obtain the first text based on the first voice data segmented in units of sentences. For example, the processor 210 may convert the first voice data into the first text based on the first language type. For example, when the first voice data is composed of English, the processor 210 may convert the first voice data into the first text based on English.

The processor 210 may convert the third voice data of the second language type obtained through the microphone 250 into third text of the second language type. For example, when the third voice data is composed of Korean, the processor 210 may convert the third voice data into the third text based on Korean.

In operation 514, the processor 210 may convert the first text of the first language type into second text of the second language type using a translator (e.g., the translator 442-1 or the translator 442-2 of FIG. 4). The processor 210 may translate the first text in units of sentences. The processor 210 may obtain the second text based on translation of the first text.

According to an embodiment, the processor 210 may convert the third text of the second language type into fourth text of the first language type using a translator. The processor 210 may translate the third text in units of sentences. The processor 210 may obtain the fourth text based on translation of the third text.

In operation 515, the processor 210 may convert the second text of the second language type into second voice data of the second language type using a voice converter (e.g., the voice converter 432-1 or the voice converter 432-2 of FIG. 4). For example, the voice converter may be referred to as TTS.

According to an embodiment, the processor 210 may convert the fourth text of the first language type into fourth voice data of the first language type using the translator.

In operation 516, the processor 210 may output the second voice data of the second language type through the speaker 240. The processor 210 may output the second voice data in response to outputting the first voice data. According to an embodiment, the processor 210 may output only the second voice data without outputting the first voice data.

According to an embodiment, the processor 210 may display the second text of the second language type while outputting the second voice data. For example, the processor 210 may display the first text corresponding to the first voice data using a display 260 while outputting the first voice data using the speaker 240. The processor 210 may display the second text corresponding to the second voice data using the display 260 while outputting the second voice data using the speaker 240.

According to an embodiment, the processor 210 may not output the second voice data after the first voice data is output through the speaker 240. The processor 210 may display the first text corresponding to the first voice data and the second text corresponding to the second voice data based on outputting the first voice data. The processor 210 may output the second voice data using the speaker 240 based on identifying an input for the second text.

According to an embodiment, the processor 210 may transmit the second voice data to the external electronic device. The processor 210 may transmit the second voice data to the external electronic device to indicate that the first voice data received from the external electronic device is translated and provided in the electronic device 200.

According to an embodiment, the processor 210 may display the fourth text of the first language type while outputting the fourth voice data. For example, the processor 210 may display the third text corresponding to the third voice data using the display 260 while transmitting the third voice data to the external electronic device. The processor 210 may display the fourth text corresponding to the fourth voice data using the display 260 while outputting the fourth voice data using the speaker 240.

According to the above-described embodiment, the voice data manager may distinguish the first voice data received from the external electronic device and the third voice data obtained through the microphone 250. The processor 210 may deliver, using the voice data manager, the second voice data obtained based on the first voice data to an audio kernel to output the second voice data through the speaker 240. The processor 210 may deliver the fourth voice data to the application related to VoIP to transmit the fourth voice data obtained based on the third voice data to the external electronic device, using the voice data manager.

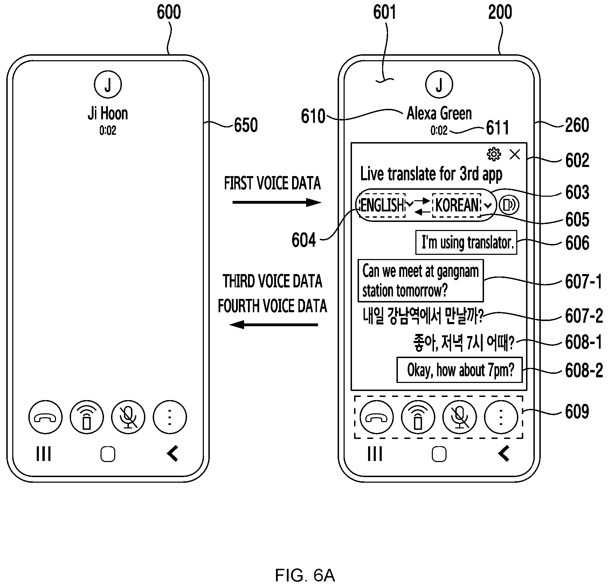

FIG. 6A illustrates an example of an operation of an electronic device for providing a call translation service according to an embodiment.

Referring to FIG. 6A, a processor 210 of an electronic device 200 may establish a call connection related to VoIP with an external electronic device 600 through an application related to VoIP. The processor 210 may display a user interface 601 for the application related to VoIP through a display 260. For example, the user interface 601 may include an element 610 indicating caller information, an element 611 indicating a time during which the call connection is maintained, and/or elements 609 for a setting for the call connection related to VoIP (e.g., termination of the call connection, speakerphone setting, or muting). The external electronic device 600 may also display a user interface 650 corresponding to the user interface 601 while the call connection is established through the application related to VoIP.

According to an embodiment, the processor 210 may perform a call translation service while the call connection related to VoIP is established. The processor 210 may display a visual object 602 for the call translation service, superimposed on the user interface 601. For example, transparency of the visual object 602 may be changed. The processor 210 may display, together with the visual object 602, an element (e.g., a slider) for changing the transparency of the visual object 602. The processor 210 may change the transparency of the visual object 602 based on a user input for the element. Although FIG. 6A illustrates an example in which the visual object 602 is displayed superimposed on the user interface 601, the present disclosure is not limited thereto. According to an embodiment, the visual object 602 may be displayed based on screen splitting. For example, a screen corresponding to the visual object 602 may be displayed in a first area of the display 260, and a screen corresponding to the user interface 601 may be displayed in a second area of the display 260.

For example, the visual object 602 may include an object 603 for setting a target language for translation. For example, the object 603 may indicate target language types for translation. The object 603 may include an object 604 indicating a first language type and an object 605 indicating a second language type. The processor 210 may identify a language type of first voice data received from the external electronic device 600 as the first language type. One of the target language types for translation may be set as the first language type. The processor 210 may identify a language type set in a system of the electronic device 200 as the second language type. The processor 210 may set a remaining one of the target language types for translation as the second language type. According to an embodiment, the target language type for translation may be changed based on an input for the object 604 and/or the object 605.

According to an embodiment, the processor 210 may display text 606 indicating that the call translation service is performed in the visual object 602. The processor 210 may transmit voice data corresponding to the text 606 to the external electronic device 600. The processor 210 may transmit the voice data corresponding to the text 606 to the external electronic device 600 to notify that the call translation service is performed in the electronic device 200.

According to an embodiment, the processor 210 may receive the first voice data of the first language type from the external electronic device 600. The processor 210 may convert the first voice data of the first language type into first text 607-1 of the first language type. The processor 210 may display the first text 607-1 in the visual object 602 based on outputting the first voice data through a speaker 240. The processor 210 may convert the first text 607-1 of the first language type into second text 607-2 of the second language type using a translator. The processor 210 may display the second text 607-2 in the visual object 602. The processor 210 may output second voice data of the second language type corresponding to the second text 607-2 of the second language type through the speaker 240 based on displaying the second text 607-2. Although not illustrated, the processor 210 may also transmit the second voice data of the second language type to the external electronic device 600.

The processor 210 may obtain third voice data of the second language type using a microphone 250. The processor 210 may convert the third voice data of the second language type into third text 608-1 of the second language type. The processor 210 may display the third text 608-1 in the visual object 602 based on obtaining the third voice data. The processor 210 may transmit the third voice data to the external electronic device 600 based on obtaining the third voice data.

The processor 210 may convert the third text 608-1 of the second language type into fourth text 608-2 of the first language type using a translator. The processor 210 may display the fourth text 608-2 in the visual object 602. The processor 210 may obtain fourth voice data of the first language type corresponding to the fourth text 608-2 of the first language type. The processor 210 may transmit the fourth voice data to the external electronic device 600.

Although not illustrated, the visual object 602 may further include an area for providing a handwriting input. The processor 210 may identify a handwriting input within the area. The processor 210 may identify text of the second language type based on the handwriting input. The processor 210 may display the text of the second language type and text of the first language type translated from the text in the visual object 602. The processor 210 may obtain voice data corresponding to the text of the first language type. The processor 210 may transmit the obtained voice data to the external electronic device 600.

According to the above-described embodiment, the processor 210 may provide the second text and/or the second voice data to a user of the electronic device 200 by translating the first voice data, regardless of whether a call translation function is provided in the external electronic device 600. The processor 210 may provide the third voice data and the fourth voice data translated from the third voice data to the external electronic device 600 regardless of whether the call translation function is provided in the external electronic device 600.

According to an embodiment, both the electronic device 200 and the external electronic device 600 may provide the call translation service. The processor 210 may identify that the call translation service is provided in the external electronic device 600. For example, the processor 210 may identify that the call translation service is provided in the external electronic device 600 based on receiving voice data corresponding to the text 606 from the external electronic device 600.

The processor 210 may not transmit the fourth voice data based on identifying that the call translation service is provided in the external electronic device 600. The electronic device 200 and the external electronic device 600 may not provide translated voice data to each other's device. For example, the processor 210 of the electronic device 200 may receive only the first voice data from the external electronic device 600. The processor 210 may provide the first text obtained based on the first voice data and/or the second voice data to the user of the electronic device 200. In addition, the processor 210 may not transmit the fourth voice data translated from the third voice data to the external electronic device 600. Although not illustrated, when the call translation service is provided in the external electronic device 600, the external electronic device 600 may display a visual object for the call translation service, superimposed on the user interface 650.

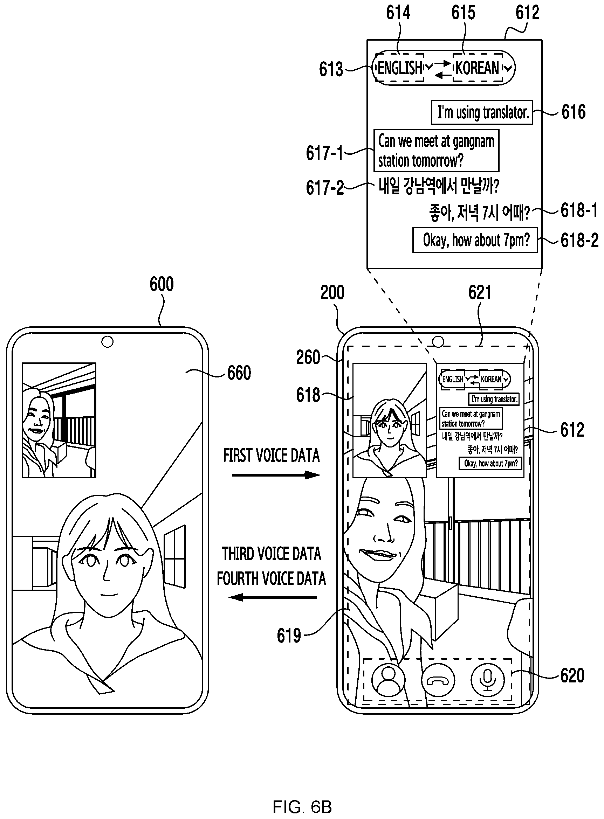

FIG. 6B illustrates an example of an operation of an electronic device for providing a call translation service according to an embodiment.

Referring to FIG. 6B, a processor 210 of an electronic device 200 may establish a call connection related to VoIP with an external electronic device 600 through an application related to VoIP. The call connection related to VoIP may be established for a video call.

The processor 210 may display a user interface 621 for the application related to VoIP through a display 260. For example, the user interface 621 may include an area 618 for displaying video data obtained through a camera 270 of the electronic device 200. The user interface 621 may include an object 619 displayed superimposed on the area 618 and for indicating video data received from the external electronic device 600. According to an embodiment, the processor 210 may display, in the area 618, the video data received from the external electronic device 600, and may also display, through the object 619, the video data obtained through the camera 270.

The user interface 621 may include elements 620 for a setting for the call connection related to VoIP (e.g., change of a video effect, termination of the video call connection, or muting). The external electronic device 600 may also display a user interface 660 corresponding to the user interface 621.

According to an embodiment, the processor 210 may perform a call translation service while the call connection related to VoIP is established. The processor 210 may display a visual object 612 for the call translation service, superimposed on the user interface 621. For example, the visual object 612 may be configured to be movable. A display position of the visual object 612 may be changed based on an input of a user. As an example, the processor 210 may change a position at which the visual object 612 is displayed based on a drag (or drag and drop) input for the visual object 612. The visual object 612 may correspond to the visual object 602 of FIG. 6A. According to an embodiment, the visual object 612 may be displayed based on screen splitting. For example, a screen corresponding to the visual object 612 may be displayed in a first area of the display 260, and a screen corresponding to the user interface 621 may be displayed in a second area of the display 260. According to an embodiment, the visual object 612 may be displayed based on one of screen splitting and/or a pop-up window. When the visual object 612 is displayed based on a pop-up window, the visual object 612 may be displayed superimposed on the user interface 621. When the visual object 612 is displayed based on screen splitting, a screen corresponding to the visual object 612 may be displayed in the first area of the display 260, and a screen corresponding to the user interface 621 may be displayed in the second area of the display 260. For example, a manner in which the visual object 612 is displayed (e.g., screen splitting or pop-up window) may be changed according to a user input.

For example, the visual object 612 may include an object 613 for setting a target language for translation. For example, the object 613 may indicate target language types for translation. The object 613 may include an object 614 indicating a first language type and an object 615 indicating a second language type. According to an embodiment, the target language type for translation may be changed based on an input for the object 614 and/or the object 615.

According to an embodiment, the processor 210 may display text 616 indicating that the call translation service is performed in the visual object 612. The processor 210 may transmit voice data corresponding to the text 616 to the external electronic device 600 to notify that the call translation service is performed in the electronic device 200.

According to an embodiment, the processor 210 may receive first voice data of the first language type from the external electronic device 600. For example, the processor 210 may receive the first voice data together with video data.

The processor 210 may convert the first voice data of the first language type into first text 617-1 of the first language type. The processor 210 may display the first text 617-1 in the visual object 612 based on outputting the first voice data through a speaker 240. The processor 210 may convert the first text 617-1 of the first language type into second text 617-2 of the second language type using a translator. The processor 210 may display the second text 617-2 in the visual object 612. The processor 210 may output second voice data of the second language type corresponding to the second text 617-2 of the second language type through the speaker 240 based on displaying the second text 617-2. Although not illustrated, the processor 210 may also transmit the second voice data of the second language type to the external electronic device 600.

The processor 210 may obtain third voice data of the second language type using a microphone 250. The processor 210 may convert the third voice data of the second language type into third text 618-1 of the second language type. The processor 210 may display the third text 618-1 in the visual object 612 based on obtaining the third voice data. The processor 210 may transmit the third voice data to the external electronic device 600 based on obtaining the third voice data.

The processor 210 may convert the third text 618-1 of the second language type into fourth text 618-2 of the first language type using a translator. The processor 210 may display the fourth text 618-2 in the visual object 612. The processor 210 may obtain fourth voice data of the first language type corresponding to the fourth text 618-2 of the first language type. The processor 210 may transmit the fourth voice data to the external electronic device 600.

Although not illustrated, the visual object 612 may further include an area for providing a handwriting input. The processor 210 may identify a handwriting input within the area. The processor 210 may identify text of the second language type based on the handwriting input. The processor 210 may display the text of the second language type and text of the first language type translated from the text in the visual object 612. The processor 210 may obtain voice data corresponding to the text of the first language type. The processor 210 may transmit the obtained voice data to the external electronic device 600.

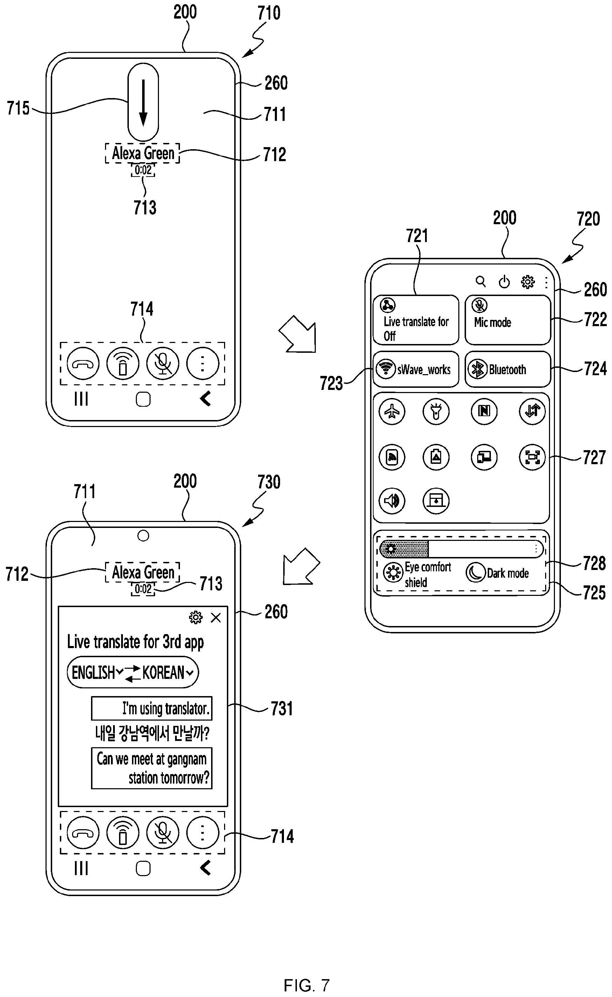

FIG. 7 illustrates an example of an operation of an electronic device for starting a call translation service according to an embodiment.

Referring to FIG. 7, in a state 710, a processor 210 may establish a call connection with an external electronic device through an application related to VoIP. The processor 210 may display a user interface 711 for the application related to VoIP through a display 260. For example, the user interface 711 may include an element 712 indicating caller information (e.g., a name), an element 713 for indicating a time during which the call connection is maintained, and/or elements 714 for a setting for the call connection related to VoIP (e.g., termination of the call connection, speakerphone setting, or muting).

According to an embodiment, while the user interface 711 is displayed, a user input 715 may be identified. For example, the user input 715 may include a swipe input from top to bottom in a display area of the display 260 of the electronic device 200. However, the present disclosure is not limited thereto. The user input 715 may include at least one of an input for an object displayed on the display 260, an input for a physical button of the electronic device 200, a drag input, an input in a designated direction, and/or a swipe input from a designated first position to a designated second position. The processor 210 may change a state of the electronic device 200 from the state 710 to a state 720 in response to the user input 715.

In the state 720, the processor 210 may display an object 725 superimposed on the user interface 711. The object 725 may indicate setting information of the electronic device 200. For example, the object 725 may include an object 721 for activation or deactivation of a call translation function, an object 722 for activation or deactivation of a microphone mode, an object 723 for activation or deactivation of a wireless LAN function, an object 724 for activation or deactivation of a Bluetooth function, an area 727 for objects for activation or deactivation of designated functions, and/or an area 728 for a setting of the display 260.

According to an embodiment, the processor 210 may identify an input for the object 721 for activation or deactivation of the call translation function. The processor 210 may activate or deactivate the call translation function based on the input for the object 721. According to an embodiment, the processor 210 may display the object 721 only when the application related to VoIP is being executed.

For example, when the call translation function is activated, the processor 210 may indicate a visual effect (e.g., displaying a designated color) for the object 721. When the call translation function is deactivated, the processor 210 may remove the visual effect for the object 721. For example, the processor 210 may control activation or deactivation of the call translation function based on an input (e.g., a tap input or a swipe input) for the object 721.

According to an embodiment, the processor 210 may activate the call translation function based on the input for the object 721. The processor 210 may change a state of the electronic device 200 from the state 720 to a state 730 in response to the input for the object 721.

In the state 730, the processor 210 may display a visual object 731 superimposed on the user interface 711 for the application related to VoIP. The visual object 731 may be displayed to provide the call translation service. The visual object 731 may be displayed through an application distinguished from the application related to VoIP. According to an embodiment, the visual object 731 may correspond to the visual object 602 of FIG. 6A or the visual object 612 of FIG. 6B.

According to an embodiment, the processor 210 may provide the call translation service from a point in time at which the input for the object 721 is identified. According to an embodiment, the processor 210 may also provide the call translation service according to voice data exchanged with the external electronic device from a point in time at which the call connection is established, based on the input for the object 721.

According to an embodiment, the processor 210 may deactivate the call translation function based on another input for the object 721. The processor 210 may remove the visual object 731 displayed superimposed on the user interface 711 based on another input for the object 721.

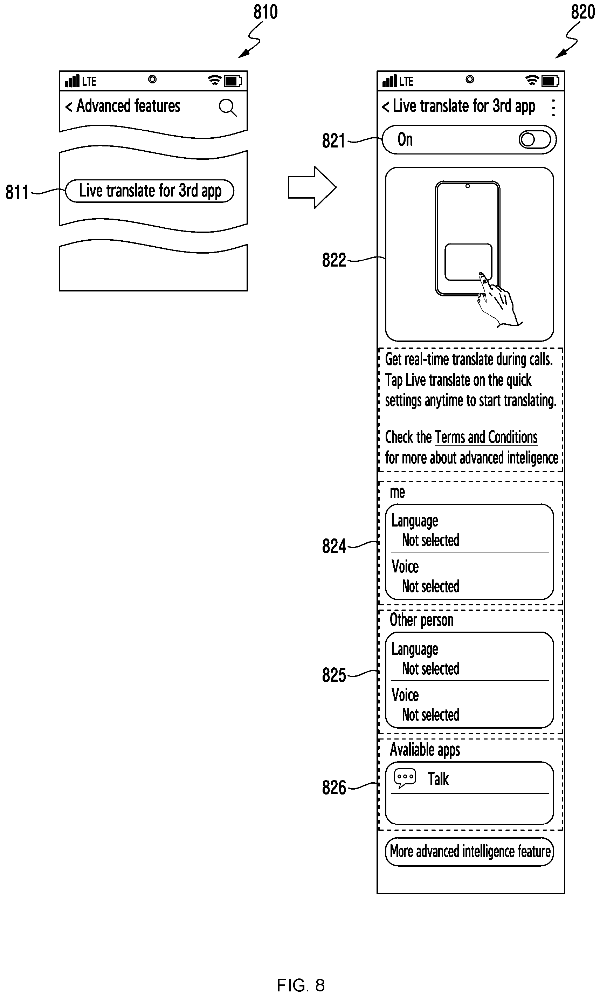

FIG. 8 illustrates an example of an operation of an electronic device for setting a function for a call translation service within system settings according to an embodiment.

Referring to FIG. 8, a processor 210 may display a screen 810 for system settings of an electronic device 200. Although omitted in the illustration, the screen 810 for system settings may include a plurality of menus. The screen 810 may include a menu 811 for a setting related to the call translation service. The processor 210 may change the screen 810 to a screen 820 in response to identifying an input for the menu 811. The screen 810 of FIG. 8 is merely an example for convenience of description, and embodiments of the present disclosure are not limited thereto.

The processor 210 may display the screen 820 for a detailed setting related to the call translation service in response to identifying an input for the menu 811.

For example, the screen 820 may include an object 821 for activation or deactivation of the call translation service. The object 821 may include a toggle. The processor 210 may change activation or deactivation of the call translation service based on an input for the toggle. For example, the screen 820 may include an object 822 for indicating a manner in which a visual object for the call translation service is displayed.

For example, the screen 820 may include a menu 824 for selecting a language type (or a target language type) related to voice data received in the electronic device 200 and/or a voice for outputting the voice data. The screen 820 may include a menu 825 for selecting a language type (or a target language type) related to voice data obtained from an external electronic device and/or a voice for outputting the voice data.

For example, the screen 820 may include a menu 826 indicating a list of applications related to VoIP for providing the call translation service. Applications displayed in the menu 826 may be changed. For example, based on installation and/or deletion of an application related to VoIP, the application may be added to the menu 826. Based on addition of the application, the applications displayed in the menu 826 may be updated. According to an embodiment, at least some or all of the applications displayed in the menu 826 may be changed based on a user input. The processor 210 may add an application to the applications displayed in the menu 826 or remove at least some or all of the applications displayed in the menu 826 based on a user input.

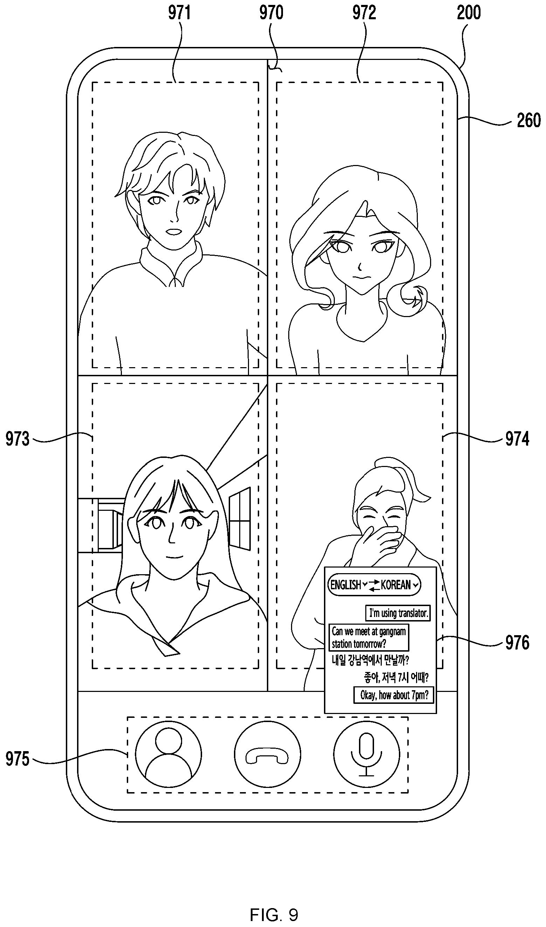

FIG. 9 illustrates an example of an operation of an electronic device for providing a call translation service while a video call service is provided through an application related to VoIP according to an embodiment.

Referring to FIG. 9, a processor 210 of an electronic device 200 may establish a call connection related to VoIP with a plurality of external electronic devices through an application related to VoIP. The call connection related to VoIP may be established for a video call.

The processor 210 may display a user interface 970 for the application related to VoIP through a display 260. For example, the user interface 970 may display video data obtained through a camera 270 of the electronic device 200 in an area 971. The processor 210 may display video data received from a first external electronic device among the plurality of external electronic devices in an area 972. The processor 210 may display video data received from a second external electronic device among the plurality of external electronic devices in an area 973. The processor 210 may display video data received from a third external electronic device among the plurality of external electronic devices in an area 974.

The user interface 970 may include elements 975 for a setting for the call connection related to VoIP (e.g., change of a video effect, termination of the video call connection, or muting).

According to an embodiment, the processor 210 may obtain voice data of a second language type using a microphone 250. The processor 210 may obtain voice data of the second language type from the first external electronic device and the second external electronic device. On the other hand, the processor 210 may obtain voice data of a first language type from the third external electronic device.

Based on obtaining voice data of the first language type from the third external electronic device, the processor 210 may provide the call translation service for the voice data received from the third external electronic device. The processor 210 may display a visual object 976 for the call translation service, superimposed on the area 974 for displaying video data received from the third external electronic device. According to an embodiment, a position at which the visual object 976 is displayed may be changed. The processor 210 may not provide a translation service for voice data obtained from the first external electronic device and the second external electronic device. The processor 210 may provide a translation service only for voice data obtained from the third external electronic device.

For example, the processor 210 may obtain first voice data of the first language type from the third external electronic device. The processor 210 may obtain text of the first language type corresponding to the first voice data of the first language type. The processor 210 may obtain text of the second language type using a translator based on the text of the first language type. The processor 210 may display the text of the first language type and the text of the second language type in the visual object 976.

According to an embodiment, the processor 210 may not transmit voice data corresponding to the text of the second language type to the plurality of external electronic devices. The processor 210 may not transmit the voice data corresponding to the text of the second language type to the plurality of external electronic devices based on the call connection with the plurality of external electronic devices being established.

In FIG. 9, an example in which the translation service for voice data obtained from the third external electronic device is provided has been described, but the present disclosure is not limited thereto. According to an embodiment, the electronic device 200 may provide the translation service for three or more language types.

For example, voice data of a second language type (e.g., Spanish) may be obtained from the first external electronic device, voice data of a third language type (e.g., Japanese) may be obtained from the second external electronic device, and voice data of a fourth language type (e.g., French) may be obtained from the third external electronic device. The processor 210 may obtain and output voice data of a first language type (e.g., English) based on the voice data of the second language type obtained from the first external electronic device. The processor 210 may obtain and output voice data of the first language type (e.g., English) based on the voice data of the third language type obtained from the second external electronic device. The processor 210 may obtain and output voice data of the first language type (e.g., English) based on the voice data of the third language type obtained from the third external electronic device.

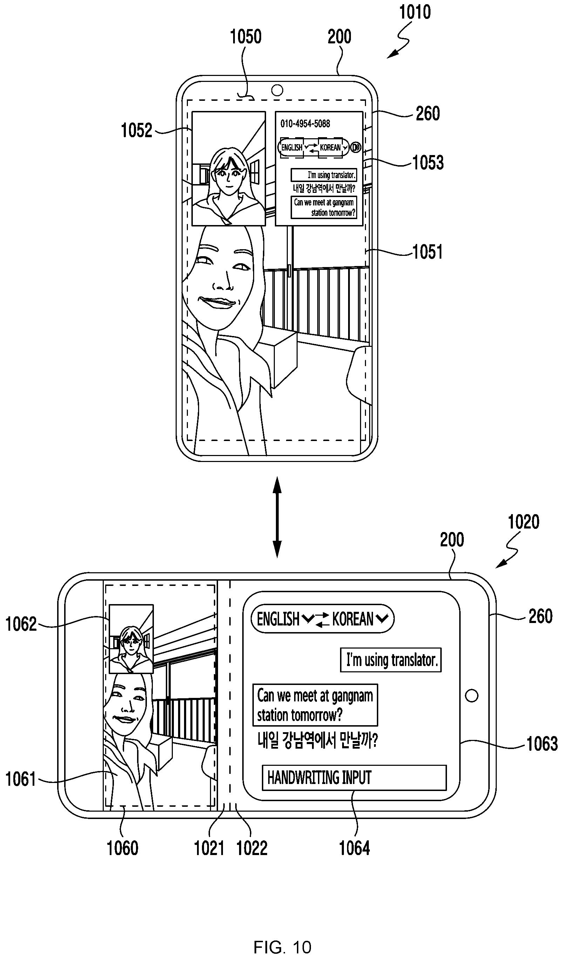

FIG. 10 illustrates an example of an operation of an electronic device for providing a call translation service while a video call service is provided through an application related to VoIP according to an embodiment.

Referring to FIG. 10, in a state 1010, an electronic device 200 may operate in a portrait mode. In a state 1020, the electronic device 200 may operate in a landscape mode. A processor 210 may identify a display mode of the electronic device 200 as one of the portrait mode and the landscape mode using a gyro sensor included in the electronic device 200.

In the state 1010 and the state 1020, the processor 210 may establish a call connection with an external electronic device through an application related to VoIP. The processor 210 may display user interfaces 1050 and 1060 for the application related to VoIP through a display 260.

In the state 1010, the processor 210 may display the user interface 1050 for the application related to VoIP. The user interface 1050 may include an area 1052 for displaying video data obtained through a camera 270 of the electronic device 200. The user interface 1050 may include an object 1051 displayed superimposed on the area 1052 and for indicating video data received from the external electronic device. According to an embodiment, the processor 210 may display, in the area 1052, the video data received from the external electronic device, and may also display, through the object 1051, the video data obtained through the camera 270. For example, the user interface 1050 may correspond to the user interface 601 of FIG. 6B.

According to an embodiment, the processor 210 may identify that the display mode of the electronic device 200 is changed from the portrait mode to the landscape mode. The processor 210 may change a state of the electronic device 200 from the state 1010 to the state 1020 based on identifying that the display mode of the electronic device 200 is changed from the portrait mode to the landscape mode.

In the state 1020, the processor 210 may display the user interface 1060 for the application related to VoIP in a first display area 1021 of a display area of the display 260. The processor 210 may display a visual object 1063 for the call translation service in a second display area 1022 of the display area of the display 260. While the display mode is the landscape mode, the processor 210 may display the user interface 1060 and the visual object 1063 separately.

For example, the user interface 1060 may include an area 1062 for displaying video data obtained through the camera 270 of the electronic device 200. The user interface 1060 may include an object 1061 displayed superimposed on the area 1062 and for indicating video data received from the external electronic device. According to an embodiment, the processor 210 may display, in the area 1062, the video data received from the external electronic device, and may also display, through the object 1061, the video data obtained through the camera 270. For example, the user interface 1060 may correspond to the user interface 601 of FIG. 6B.

For example, the visual object 1063 may be configured to provide the call translation service. The visual object 1063 may include information for providing the call translation service.

For example, the visual object 1063 may include an area 1064 for providing a handwriting input. The processor 210 may identify a handwriting input in the area 1064 through an external electronic device (e.g., a stylus or a digital pen) or a body part of a user (e.g., a finger). The processor 210 may identify text according to the handwriting input and may transmit, to the external electronic device, voice data obtained from the text according to the handwriting input. A visual object 1053 displayed in the portrait mode may not include an area for providing a handwriting input. The visual object 1063 displayed in the landscape mode may include the area 1064 for providing a handwriting input. According to an embodiment, the visual object 1053 may also include an area for providing a handwriting input.

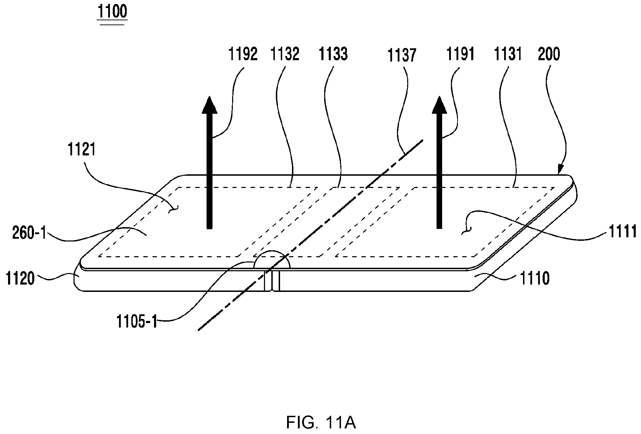

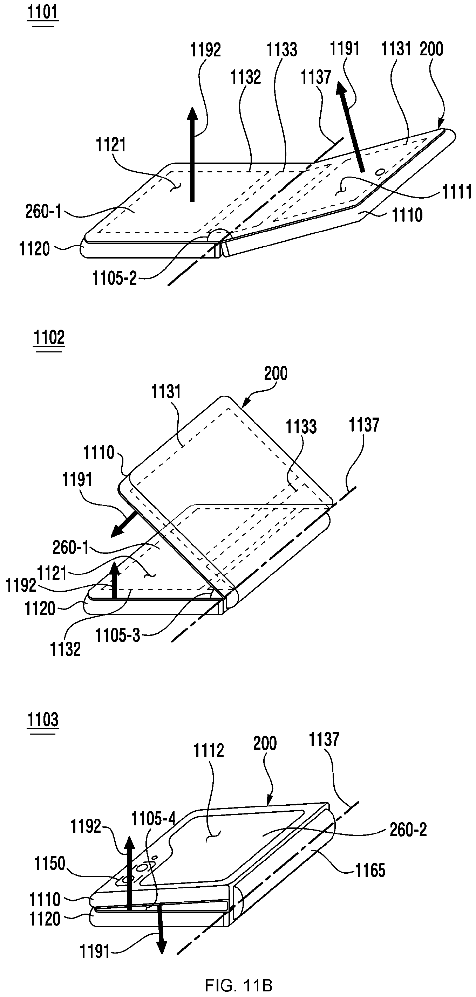

FIGS. 11A and 11B illustrate an example of a positional relationship between a first housing and a second housing in an unfolded state and a folded state of an electronic device according to an embodiment.

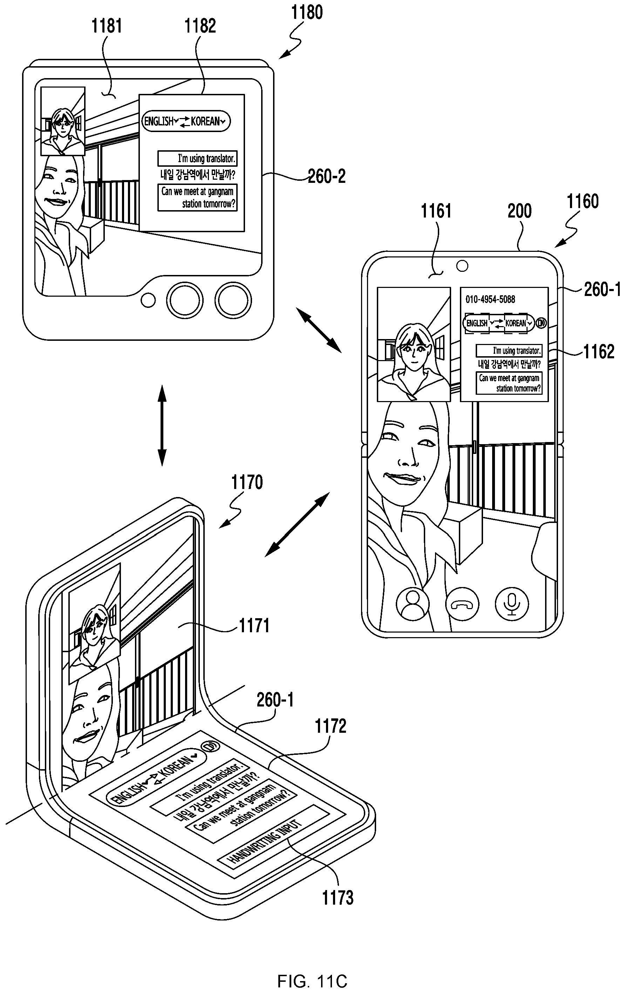

FIG. 11C illustrates an example of a screen for a call translation service displayed based on a positional relationship between a first housing and a second housing according to an embodiment.

Referring to FIGS. 11A and 11B, an electronic device 200 may be an example of the electronic device 101 of FIG. 1. For example, a display 260 of the electronic device 200 may include a first display 260-1 and a second display 260-2.

A first housing 1110, a second housing 1120, and a folding housing 1165 may be included in the electronic device 200. The electronic device 200 may include the first housing 1110 including a first surface 1111 and a second surface 1112 opposite to the first surface. The electronic device 200 may include the second housing 1120 including a third surface 1121 and a fourth surface (not illustrated) opposite to the third surface 1121. The electronic device 200 may include the folding housing 1165 pivotably connecting the first housing 1110 and the second housing 1120 based on a folding axis 1137. At least a portion of the first display 260-1 may be disposed on one surface (e.g., the first surface 1111) of the first housing 1110 and one surface (e.g., the third surface 1121) of the second housing 1120. For example, at least a portion of the first display 260-1 may be disposed on the first surface 1111 and the third surface 1121 across the folding housing 1165. A first display area 1131, a second display area 1132, and a third display area 1133 may be included in the first display 260-1. The folding housing 1165 may include a hinge structure. The second display 260-2 may be disposed on the second surface 1112. The electronic device 200 may include a camera oriented in a direction in which the second surface 1112 faces. The camera may be disposed in a partial area 1150 of the second surface 1112.

The above-described housings (e.g., the first housing 1110, the second housing 1120, and the folding housing 1165) may be referred to as housing parts. For example, the first housing 1110 may be referred to as a first housing part. For example, the second housing 1120 may be referred to as a second housing part. For example, the folding housing 1165 may be referred to as a folding housing part.

According to an embodiment, the electronic device 200 may provide an unfolded(unfolding) state in which the first housing 1110 and the second housing 1120 are fully folded out by the folding housing 1165. For example, referring to FIG. 11A, the electronic device 200 may be in a state 1100, which is the unfolded state. For example, the state 1100 may mean a state in which a first direction 1191 in which the first surface 1111 faces corresponds to a second direction 1192 in which the third surface 1121 faces. For example, in the state 1100, the first direction 1191 may be substantially parallel to the second direction 1192. For example, in the state 1100, the first direction 1191 may be substantially identical to the second direction 1192.

According to an embodiment, in the state 1100, the first surface 1111 may form substantially one plane with the third surface 1121. For example, in the state 1100, an angle 1105-1 between the first surface 1111 and the third surface 1121 may be approximately 180 degrees. For example, the state 1100 may mean a state in which an entire display area of the first display 260-1 may be provided substantially on one plane. For example, the state 1100 may mean a state in which all of the first display area 1131, the second display area 1132, and the third display area 1133 may be provided on one plane. For example, in the state 1100, the third display area 1133 may not include a curved surface. For example, the unfolded state may be referred to as an outspread state or an outspreading state. Hereinafter, different states of the electronic device 200 based on angles 1105-2, 1105-3, and 1105-4 will be described.

Referring to FIG. 11B, the electronic device 200 according to an embodiment may provide a folded state in which the first housing 1110 and the second housing 1120 are folded in by the folding housing 1165. For example, the electronic device 200 may be in the folded state including a state 1101, a state 1102, and a state 1103. For example, the folded state including the state 1101, the state 1102, and the state 1103 may mean a state in which the first direction 1191 in which the first surface 1111 faces is different from the second direction 1192 in which the third surface 1121 faces. For example, in the state 1101, an angle between the first direction 1191 and the second direction 1192 may be approximately 45 degrees, and the first direction 1191 and the second direction 1192 may be different from each other. For example, in the state 1102, an angle between the first direction 1191 and the second direction 1192 may be approximately 150 degrees, and the first direction 1191 and the second direction 1192 may be different from each other. For example, in the state 1103, an angle between the first direction 1191 and the second direction 1192 may be substantially 180 degrees, and the first direction 1191 and the second direction 1192 may be different from each other.

According to an embodiment, in the folded state, an angle between the first surface 1111 and the third surface 1121 may be within a range of equal to or greater than 0 degrees and less than 180 degrees. For example, in the state 1101, an angle 1105-2 between the first surface 1111 and the third surface 1121 may be approximately 135 degrees. In the state 1102, an angle 1105-3 between the first surface 1111 and the third surface 1121 may be approximately 30 degrees. In the state 1103, an angle 1105-4 between the first surface 1111 and the third surface 1121 may be substantially 0 degrees. For example, the folding state may be referred to as a folded state.

In an embodiment, unlike the unfolded state, the folded state may include a plurality of sub-folded states. For example, referring to FIG. 11B, the folded state may include the plurality of sub-folded states including a state 1103, which is a fully folded (folding) state in which the first surface 1111 is substantially superimposed on the third surface 1121 by rotation provided through the folding housing 1165, and states 1101 and 1102, which are intermediate folded states between the state 1103 and the unfolded state (e.g., the state 1100 of FIG. 11A). For example, the electronic device 200 may provide the state 1103 in which an entire area of the first display area 1131 is substantially fully superimposed on an entire area of the second display area 1132 by the first surface 1111 and the third surface 1121 facing each other by the folding housing 1165. For example, the electronic device 200 may provide the state 1103 in which the first direction 1191 is substantially opposite to the second direction 1192. For example, the state 1103 may mean a state in which the first display 260-1 is hidden within a field of view of a user viewing the electronic device 200. However, the present disclosure is not limited thereto.

According to an embodiment, the first display 260-1 may be bent by rotation provided through the folding housing 1165. For example, in the first display 260-1, unlike the first display area 1131 and the second display area 1132, the third display area 1133 may be bent according to a folding operation. For example, the third display area 1133 may be in a bent state to prevent damage to the first display 260-1 in the fully folded state. In the fully folded state, unlike the third display area 1133 being bent, an entire first display area 1131 may be fully superimposed on an entire second display area 1132.

Referring to FIGS. 11A to 11B, although an example in which the first display 260-1 of the electronic device 200 includes one folding display area (e.g., the third display area 1133) or the electronic device 200 includes one folding housing (e.g., the folding housing 1165) is illustrated, this is for convenience of description. According to embodiments, the first display 260-1 of the electronic device 200 may include a plurality of folding display areas. For example, the first display 260-1 of the electronic device 200 may include two or more folding display areas, and the electronic device 200 may include two or more folding housings for respectively providing the two or more folding display areas.

Referring to FIG. 11C, a call translation service may be provided in a state 1160, a state 1170, and a state 1180. For a description of FIG. 11C, reference numerals of FIGS. 11A and 11B may be used.

For example, the state 1160 may correspond to the state 1100 of FIGS. 11A and 11B. As an example, in the state 1160, a first direction 1191 in which a first surface 1111 faces may correspond to a second direction 1192 in which a third surface 1121 faces.

For example, the state 1170 may correspond to the state 1101 of FIGS. 11A and 11B. As an example, in the state 1170, an angle between the first direction 1191 in which the first surface 1111 faces and the second direction 1192 in which the third surface 1121 faces may be within a designated angle.

For example, the state 1180 may correspond to the state 1103 of FIGS. 11A and 11B. As an example, in the state 1180, the first direction 1191 in which the first surface 1111 faces and the second direction 1192 in which the third surface 1121 faces may be opposite to each other.

In the state 1160, a processor 210 may display, using a first display 260-1, a user interface 1161 for an application related to VoIP. The processor 210 may display a visual object 1162 for providing the call translation service, superimposed on the user interface 1161. A screen displayed in the state 1160 may correspond to a screen displayed in the electronic device 200 of FIG. 6B.

In the state 1170, the processor 210 may display a user interface 1171 for the application related to VoIP in a first display area 1131 (or at least a portion of the first display area 1131 and a third display area 1133) of the first display 260-1. The processor 210 may display a visual object 1172 for providing the call translation service in a second display area 1132 (or at least a portion of the second display area 1132 and the third display area 1133) of the first display 260-1. For example, the visual object 1172 may further include an area 1173 for providing a handwriting input.

In the state 1180, the processor 210 may display, using a second display 260-2, a user interface 1181 for the application related to VoIP. The processor 210 may display a visual object 1182 for providing the call translation service, superimposed on the user interface 1181. A screen displayed in the state 1180 may be a screen in which the screen displayed in the state 1160 is modified according to a size of the second display 260-2.

According to an embodiment, an electronic device (e.g., an electronic device 200) may comprise a display (e.g., a display 260), a speaker (e.g., a speaker 240), a microphone (e.g., a microphone 250), a communication circuit (e.g., a communication circuit 230), at least one processor (e.g., a processor 210) comprising processing circuitry, and memory (e.g., memory 220) comprising one or more storage media storing instructions. The instructions, when executed by the at least one processor individually or collectively, may cause the electronic device to identify that a call connection with an external electronic device is established through an application related to a voice over internet protocol (VoIP). The instructions, when executed by the at least one processor individually or collectively, may cause the electronic device to, while the call connection is established, obtain first voice data of a first language type, related to the application. The instructions, when executed by the at least one processor individually or collectively, may cause the electronic device to obtain, based on first text of the first language type converted from the first voice data of the first language type, second text of a second language type distinct from the first language type. The instructions, when executed by the at least one processor individually or collectively, may cause the electronic device to display, through the display, a visual object comprising the first text and the second text superimposed on a user interface for the application.

According to an embodiment, the first voice data of the first language type may be received from the external electronic device.

According to an embodiment, the instructions, when executed by the at least one processor individually or collectively, may cause the electronic device to obtain, based on the second text of the second language type, second voice data of the second language type. The instructions, when executed by the at least one processor individually or collectively, may cause the electronic device to output, through the speaker, the second voice data after the first voice data is output.

According to an embodiment, the instructions, when executed by the at least one processor individually or collectively, may cause the electronic device to obtain, through the microphone, third voice data of the second language type. The instructions, when executed by the at least one processor individually or collectively, may cause the electronic device to obtain, based on third text of the second language type converted from the third voice data of the second language type, fourth text of the first language type. The instructions, when executed by the at least one processor individually or collectively, may cause the electronic device to transmit, through the call connection, fourth voice data of the first language type obtained based on the fourth text of the first language type, to the external electronic device.

According to an embodiment, the third text and the fourth text may be comprised in the visual object.

According to an embodiment, the instructions, when executed by the at least one processor individually or collectively, may cause the electronic device to, while the call connection is established, obtain the first voice data from the application through a voice data manager configured for obtaining voice data related to the application.

According to an embodiment, the instructions, when executed by the at least one processor individually or collectively, may cause the electronic device to provide the first voice data to a translator for changing a language type, connected to the voice data manager. The instructions, when executed by the at least one processor individually or collectively, may cause the electronic device to obtain, based on the first voice data of the first language type, using the translator, the second text of the second language type.

According to an embodiment, the instructions, when executed by the at least one processor individually or collectively, may cause the electronic device to, while the user interface is displayed, identify an input for displaying the visual object. The instructions, when executed by the at least one processor individually or collectively, may cause the electronic device to, based on the input for displaying the visual object, display the visual object superimposed on the user interface.

According to an embodiment, the electronic device may comprise a first housing, a second housing, and a hinge structure rotatably coupling the first housing to the second housing based on a folding axis. The display may include a first display area corresponding to one surface of the first housing and a second display area corresponding to one surface of the second housing divided based on the folding axis. The instructions, when executed by the at least one processor individually or collectively, may cause the electronic device to display the visual object superimposed on the user interface displayed on the first display area and the second display area, in a first state in which a first direction in which the first display area faces corresponds to a second direction in which the second display area faces.

According to an embodiment, the instructions, when executed by the at least one processor individually or collectively, may cause the electronic device to, based on a state of the electronic device changed from the first state to a second state in which an angle between the first direction and the second direction is within a designated angle, display the user interface in the first display area and display the visual object in the second display area of the display.

According to an embodiment, the electronic device may comprise another display disposed on another surface of the first housing. The instructions, when executed by the at least one processor individually or collectively, may cause the electronic device to, based on a state of the electronic device changed from the first state to a third state in which the first direction and the second direction are opposite to each other, display, through the another display, the visual object superimposed on the user interface.

According to an embodiment, the instructions, when executed by the at least one processor individually or collectively, may cause the electronic device to identify, based on the first voice data, a language type of the first voice data as the first language type.

According to an embodiment, the visual object may comprise an area for providing a handwriting input.

According to an embodiment, the instructions, when executed by the at least one processor individually or collectively, may cause the electronic device to identify text according to the handwriting input. The instructions, when executed by the at least one processor individually or collectively, may cause the electronic device to transmit voice data obtained from the text according to the handwriting input to the external electronic device through the call connection.

According to an embodiment, the call connection may be established for at least one of a video call and a voice call.

According to an embodiment, a method performed by an electronic device may comprise identifying that a call connection with an external electronic device through an application related to a voice over internet protocol (VoIP) is established. The method may comprise, while the call connection is established, obtaining first voice data of a first language type, related to the application. The method may comprise obtaining, based on first text of the first language type converted from the first voice data of the first language type, second text of a second language type distinct from the first language type. The method may comprise displaying, through a display of the electronic device, a visual object comprising the first text and the second text superimposed on a user interface for the application.

According to an embodiment, the first voice data of the first language type may be received from the external electronic device.

According to an embodiment, the method may comprise obtaining, through a microphone of the electronic device, third voice data of the second language type. The method may comprise obtaining, based on third text of the second language type converted from the third voice data of the second language type, fourth text of the first language type. The method may comprise transmitting, through the call connection, fourth voice data of the first language type obtained based on the fourth text of the first language type, to the external electronic device.

According to an embodiment, the third text and the fourth text may be comprised in the visual object.

According to an embodiment, a non-transitory computer readable storage medium may store one or more programs. The one or more programs may comprise instructions that, when executed by a processor of an electronic device with a display, a speaker, a microphone, and a communication circuit, cause the electronic device to identify that a call connection with an external electronic device is established through an application related to a voice over internet protocol (VoIP). The one or more programs may comprise instructions that, when executed by the processor, cause the electronic device to, while the call connection is established, obtain first voice data of a first language type, related to the application. The one or more programs may comprise instructions that, when executed by the processor, cause the electronic device to obtain, based on first text of the first language type converted from the first voice data of the first language type, second text of a second language type distinct from the first language type. The one or more programs may comprise instructions that, when executed by the processor, cause the electronic device to display, through the display, a visual object comprising the first text and the second text superimposed on a user interface for the application.

According to an embodiment, an electronic device may comprise a speaker, a microphone, a communication circuit, at least one processor comprising processing circuitry, and memory comprising one or more storage media storing instructions. The instructions, when executed by the at least one processor individually or collectively, may cause the electronic device to, while a call connection with an external electronic device through an application related to a voice over internet protocol (VoIP) is established, obtain, using a voice data manager configured for obtaining voice data related to the application, from the application, first voice data of a first language type received from the external electronic device. The instructions, when executed by the at least one processor individually or collectively, may cause the electronic device to provide, using the voice data manager, the first voice data of the first language type to a voice recognizer. The instructions, when executed by the at least one processor individually or collectively, may cause the electronic device to, convert, using the voice recognizer, the first voice data of the first language type into first text of the first language type. The instructions, when executed by the at least one processor individually or collectively, may cause the electronic device to, convert, using a translator, the first text of the first language type into second text data of a second language type distinct from the first language type. The instructions, when executed by the at least one processor individually or collectively, may cause the electronic device to, convert, using a voice converter, the second text of the second language type into second voice data of the second language type. The instructions, when executed by the at least one processor individually or collectively, may cause the electronic device to output the second voice data of the second language type through the speaker.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," or "connected with" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a compiler or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between a case in which data is semi-permanently stored in the storage medium and a case in which the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device comprising:
a display,
a speaker,
a microphone,
a communication circuit,
at least one processor, comprising processing circuitry, and
memory comprising one or more storage media storing instructions,
wherein the instructions, when executed by the at least one processor individually or collectively, cause the electronic device to:
identify that a call connection with an external electronic device through an application related to a voice over internet protocol (VoIP) is established,
while the call connection is established, obtain first voice data of a first language type, related to the application,
obtain, based on first text of the first language type converted from the first voice data of the first language type, second text of a second language type distinct from the first language type, and
display, through the display, a visual object comprising the first text and the second text superimposed on a user interface for the application.

2. The electronic device of claim 1, wherein the first voice data of the first language type is received from the external electronic device.

3. The electronic device of claim 2, wherein the instructions, when executed by the at least one processor individually or collectively, further cause the electronic device to:
obtain, based on the second text of the second language type, second voice data of the second language type, and
after the first voice data is output, output, through the speaker, the second voice data.

4. The electronic device of claim 2, wherein the instructions, when executed by the at least one processor individually or collectively, further cause the electronic device to:
obtain, through the microphone, third voice data of the second language type,
obtain, based on third text of the second language type converted from the third voice data of the second language type, fourth text of the first language type, and
transmit, through the call connection, fourth voice data of the first language type obtained based on the fourth text of the first language type, to the external electronic device.

5. The electronic device of claim 4, wherein the third text and the fourth text are comprised in the visual object.

6. The electronic device of claim 1, wherein the instructions, when executed by the at least one processor individually or collectively, further cause the electronic device to, while the call connection is established, obtain the first voice data from the application through a voice data manager configured for obtaining voice data related to the application.

7. The electronic device of claim 6, wherein the instructions, when executed by the at least one processor individually or collectively, further cause the electronic device to,
provide the first voice data to a translator for changing a language type, connected to the voice data manager, and
based on the first voice data of the first language type, obtain, using the translator, the second text of the second language type.

8. The electronic device of claim 1, wherein the instructions, when executed by the at least one processor individually or collectively, further cause the electronic device to,
while the user interface is displayed, identify an input for displaying the visual object, and
based on the input for displaying the visual object, display the visual object superimposed on the user interface.

9. The electronic device of claim 1, wherein the electronic device further comprises:
a first housing,
a second housing, and
a hinge structure rotatably coupling the first housing to the second housing based on a folding axis,
wherein the display includes a first display area corresponding to one surface of the first housing and a second display area corresponding to one surface of the second housing divided based on the folding axis, and
wherein the instructions, when executed by the at least one processor individually or collectively, further cause the electronic device to display the visual object superimposed on the user interface displayed on the first display area and the second display area, in a first state in which a first direction in which the first display area faces corresponds to a second direction in which the second display area faces.

10. The electronic device of claim 9, wherein the instructions, when executed by the at least one processor individually or collectively, further cause the electronic device to:
based on a state of the electronic device changed from the first state to a second state in which an angle between the first direction and the second direction is within a designated angle, display the user interface in the first display area and display the visual object in the second display area of the display.

11. The electronic device of claim 10, wherein the electronic device further comprises another display disposed on another surface of the first housing, and
wherein the instructions, when executed by the at least one processor individually or collectively, further cause the electronic device to, based on a state of the electronic device changed from the first state to a third state in which the first direction and the second direction are opposite to each other, display, through the another display, the visual object superimposed on the user interface.

12. The electronic device of claim 1, wherein the instructions, when executed by the at least one processor individually or collectively, further cause the electronic device to identify, based on the first voice data, a language type of the first voice data as the first language type.

13. The electronic device of claim 1, wherein the visual object further comprises an area for providing a handwriting input.

14. A method performed by an electronic device, wherein the method comprises:
identifying that a call connection with an external electronic device through an application related to a voice over internet protocol (VoIP) is established,
while the call connection is established, obtaining first voice data of a first language type, related to the application,
obtaining, based on first text of the first language type converted from the first voice data of the first language type, second text of a second language type distinct from the first language type, and
displaying, through a display of the electronic device, a visual object comprising the first text and the second text superimposed on a user interface for the application.

15. A non-transitory computer readable storage medium storing one or more programs, wherein the one or more programs comprise instructions, which, when executed by a processor of an electronic device with a display, a speaker, a microphone, and a communication circuit, cause the electronic device to:
identify that a call connection with an external electronic device through an application related to a voice over internet protocol (VoIP) is established,
while the call connection is established, obtain first voice data of a first language type, related to the application,
obtain, based on first text of the first language type converted from the first voice data of the first language type, second text of a second language type distinct from the first language type, and
display, through the display, a visual object comprising the first text and the second text superimposed on a user interface for the application.
